# EUROPEAN PATENT APPLICATION

(11) **EP 4 418 081 A1**
(43) Date of publication of application: **21.08.2024**
(21) Application number: 24158036.4
(22) Date of filing: 16.02.2024
(51) Int. Cl.: G06F 3/01, G01C 21/34, G02B 27/00, G06F 1/16, G06F 3/0482

(54) **SYSTEMS AND METHODS OF DISPLAYING USER INTERFACES BASED ON TILT**

(30) Priority: 17.02.2023 US 202363485681 P; 12.02.2024 US 202418439679
(71) Applicant: Apple Inc., Cupertino, CA 95014 (US)
(72) Inventor: MANJUNATH, Niranjan, Cupertino, 95014 (US); LAURITA, Martynas, Cupertino, 95014 (US); THAMPI, Arun K., Cupertino, 95014 (US); YE, Haishan, Cupertino, 95014 (US)
(74) Representative: COPA Copenhagen Patents

(57) **Abstract**

Some examples of the disclosure are directed to systems and methods for transitioning display of user interfaces in an extended reality environment based on tilt of an electronic device. In some examples, an electronic device presents an extended reality environment that includes a virtual object in a first visual state within the extended reality environment. In some examples, if the electronic device detects a first input that includes movement of the viewpoint, in accordance with a determination that the movement of the viewpoint exceeds a threshold movement, the electronic device displays the virtual object in a second visual state, different from the first visual state. In some examples, while displaying the virtual object in the second visual state, if the electronic device detects a second input that satisfies one or more first criteria, the electronic device displays the virtual object in the first visual state. In some examples, the user interfaces are associated with a navigation application.

## Description

### Cross-Reference to Related Applications

This application claims the benefit of U.S. Provisional Application No. 63/485,681, filed February 17, 2023, and U.S. Patent Application No. 18/439,679, filed February 12, 2024, the contents of which are herein incorporated by reference in their entireties for all purposes.

### Field of the Disclosure

This relates generally to systems and methods of transitioning display of three-dimensional user interfaces based on a tilt of an electronic device.

### Background of the Disclosure

Some computer graphical environments provide two-dimensional and/or three-dimensional environments (e.g., extended reality environments) where at least some objects displayed for a user's viewing are virtual and generated by a computer. In some examples, the objects (e.g., including virtual user interfaces, such as a virtual navigation user interface) that are displayed in the three-dimensional environments are configured to be interactive (e.g., via direct or indirect inputs provided by the user). In some examples, an object (e.g., including a virtual user interface) is displayed with a respective visual appearance (e.g., a degree of detail of the virtual user interface, a number of user interface objects included in the virtual user interface, a size of the virtual user interface, etc.) in the three-dimensional environment. In some examples, the object is configured to move within the three-dimensional environment based on a movement of the viewpoint of the user (e.g., movement of the user's head and/or torso). In some examples, an undesired or unintended view (e.g., including visual appearance) of the object is presented to the user in the three-dimensional environment after the movement of the viewpoint of the user.

### Summary of the Disclosure

Some examples of the disclosure are directed to systems and methods for transitioning display of user interfaces associated with a navigation application in an extended reality environment based on tilt of an electronic device. In some examples, an electronic device presents, via a display in communication with the electronic device, an extended reality environment that includes a virtual object that is associated with the navigation application, wherein the virtual object is displayed in a first visual state within the extended reality environment from a viewpoint of a user of the electronic device. In some examples, while presenting the extended reality environment that includes the virtual object, the electronic device detects, via one or more input devices in communication with the electronic device, a first input that includes movement of the viewpoint. In some examples, in response to detecting the first input, in accordance with a determination that the movement of the viewpoint exceeds a threshold movement, the electronic device transitions from displaying the virtual object in the first visual state to displaying the virtual object in a second visual state, different from the first visual state, in the extended reality environment from the viewpoint. In some examples, while displaying the virtual object in the second visual state, the electronic device detects a second input. In some examples, in response to detecting the second input, in accordance with a determination that the second input satisfies one or more first criteria, the electronic device transitions from displaying the virtual object in the second visual state to displaying the virtual object in the first visual state in the extended reality environment from the viewpoint. In some examples, in accordance with a determination that the second input does not satisfy the one or more first criteria, the electronic device maintains display of the virtual object in the second visual state in the extended reality environment from the viewpoint.

In some examples, the movement of the viewpoint of the user exceeds the threshold movement if an angular amount of the movement of the viewpoint of the user exceeds an angular threshold. In some examples, the angular threshold is measured relative to a reference of the electronic device. For example, the reference includes a ray extending from the electronic device that is normal to a force of gravity. In some examples, the one or more first criteria include a criterion that is satisfied when the second input includes translation of the viewpoint in the extended reality environment. In some examples, the one or more first criteria include a criterion that is satisfied when the second input includes movement of the viewpoint to within the angular threshold relative to the reference.

Some examples of the disclosure are directed to systems and methods for transitioning display of user interfaces associated with a navigation application in an extended reality environment based on tilt of an electronic device. In some examples, while presenting, via a display in communication with the electronic device, an extended reality environment, the electronic device detects, via one or more input devices in communication with the electronic device, a first input corresponding to a request to navigate to a first destination via the navigation application. In some examples, in response to detecting the first input, the electronic device initiates navigation to the first destination via the navigation application, including displaying, via the display, one or more virtual objects in the extended reality environment, wherein the one or more virtual objects are associated with navigating to the first destination. In some examples, while displaying the one or more virtual objects, the electronic device detects, via the one or more input devices, a second input that includes movement of a viewpoint of the electronic device. In some examples, in response to detecting the second input, in accordance with a determination that the second input satisfies one or more first criteria, including a criterion that is satisfied when the movement of the viewpoint exceeds a threshold movement, the electronic device replaces display of the one or more virtual objects with a virtual user interface that includes a current route to the first destination in the extended reality environment. In some examples, in accordance with a determination that the second input does not satisfy the one or more first criteria, including the criterion that is satisfied when the movement of the viewpoint exceeds the threshold movement, the electronic device maintains display of the one or more virtual objects in the extended reality environment.

The full descriptions of these examples are provided in the Drawings and the Detailed Description, and it is understood that this Summary does not limit the scope of the disclosure in any way.

### Brief Description of the Drawings

For improved understanding of the various examples described herein, reference should be made to the Detailed Description below along with the following drawings. Like reference numerals often refer to corresponding parts throughout the drawings.
FIG. 1 illustrates an electronic device presenting an extended reality environment according to some examples of the disclosure.
FIG. 2 illustrates a block diagram of an exemplary architecture for a device according to some examples of the disclosure.
FIGs. 3A-3I illustrate example interactions involving virtual user interfaces associated with a navigation application in an extended reality environment according to some examples of the disclosure.
FIGs. 4A-4L illustrate example interactions involving virtual user interfaces associated with a navigation application in an extended reality environment according to some examples of the disclosure.
FIG. 5 is a flow diagram illustrating an example process for displaying user interfaces based on tilt according to some examples of the disclosure.
FIG. 6 is a flow diagram illustrating an example process for displaying user interface based on tilt according to some examples of the disclosure.

### Detailed Description

Some examples of the disclosure are directed to systems and methods for transitioning display of user interfaces associated with a navigation application in an extended reality environment based on tilt of an electronic device. In some examples, an electronic device presents, via a display in communication with the electronic device, an extended reality environment that includes a virtual object that is associated with the navigation application, wherein the virtual object is displayed in a first visual state within the extended reality environment from a viewpoint of a user of the electronic device. In some examples, while presenting the extended reality environment that includes the virtual object, the electronic device detects, via one or more input devices in communication with the electronic device, a first input that includes movement of the viewpoint. In some examples, in response to detecting the first input, in accordance with a determination that the movement of the viewpoint exceeds a threshold movement, the electronic device transitions from displaying the virtual object in the first visual state to displaying the virtual object in a second visual state, different from the first visual state, in the extended reality environment from the viewpoint. In some examples, while displaying the virtual object in the second visual state, the electronic device detects a second input. In some examples, in response to detecting the second input, in accordance with a determination that the second input satisfies one or more first criteria, the electronic device transitions from displaying the virtual object in the second visual state to displaying the virtual object in the first visual state in the extended reality environment from the viewpoint. In some examples, in accordance with a determination that the second input does not satisfy the one or more first criteria, the electronic device maintains display of the virtual object in the second visual state in the extended reality environment from the viewpoint.

In some examples, the movement of the viewpoint of the user exceeds the threshold movement if an angular amount of the movement of the viewpoint of the user exceeds an angular threshold. In some examples, the angular threshold is measured relative to a reference of the electronic device. For example, the reference includes a ray extending from the electronic device that is normal to a force of gravity. In some examples, the one or more first criteria include a criterion that is satisfied when the second input includes translation of the viewpoint in the extended reality environment. In some examples, the one or more first criteria include a criterion that is satisfied when the second input includes movement of the viewpoint to within the angular threshold relative to the reference.

Some examples of the disclosure are directed to systems and methods for transitioning display of user interfaces associated with a navigation application in an extended reality environment based on tilt of an electronic device. In some examples, while presenting, via a display in communication with the electronic device, an extended reality environment, the electronic device detects, via one or more input devices in communication with the electronic device, a first input corresponding to a request to navigate to a first destination via the navigation application. In some examples, in response to detecting the first input, the electronic device initiates navigation to the first destination via the navigation application, including displaying, via the display, one or more virtual objects in the extended reality environment, wherein the one or more virtual objects are associated with navigating to the first destination. In some examples, while displaying the one or more virtual objects, the electronic device detects, via the one or more input devices, a second input that includes movement of a viewpoint of the electronic device. In some examples, in response to detecting the second input, in accordance with a determination that the second input satisfies one or more first criteria, including a criterion that is satisfied when the movement of the viewpoint exceeds a threshold movement, the electronic device replaces display of the one or more virtual objects with a virtual user interface that includes a current route to the first destination in the extended reality environment. In some examples, in accordance with a determination that the second input does not satisfy the one or more first criteria, including the criterion that is satisfied when the movement of the viewpoint exceeds the threshold movement, the electronic device maintains display of the one or more virtual objects in the extended reality environment.

In some examples, displaying a user interface in a three-dimensional environment (e.g., an extended reality environment) may include interaction with one or more user interface objects in the three-dimensional environment. For example, initiation of display of the user interface in the three-dimensional environment can include interaction with one or more virtual options/affordances displayed in the three-dimensional environment. In some examples, a user's gaze may be tracked by the electronic device as an input for identifying one or more virtual options/affordances targeted for selection when initiating display of an object in the three-dimensional environment. For example, gaze can be used to identify one or more virtual options/affordances targeted for selection using another selection input. In some examples, a virtual option/affordance may be selected using hand-tracking input detected via an input device in communication with the electronic device. In some examples, user interfaces displayed in the three-dimensional environment may be moved and/or reoriented in the three-dimensional environment in accordance with movement input detected via the input device.

In some examples, a three-dimensional object is displayed in a computer-generated three-dimensional environment (e.g., an extended reality environment) with a particular orientation that controls one or more behaviors of the three-dimensional object (e.g., when the three-dimensional object is moved within the three-dimensional environment). In some examples, the orientation in which the three-dimensional object is displayed in the three-dimensional environment is selected by a user of the electronic device or automatically selected by the electronic device. For example, when initiating presentation of the three-dimensional object in the three-dimensional environment, the user may select a particular orientation for the three-dimensional object or the electronic device may automatically select the orientation for the three-dimensional object (e.g., based on a type of the three-dimensional object). In some examples, a three-dimensional object can be displayed in the three-dimensional environment in a world locked orientation, a body locked orientation, a tilt locked orientation, or a head locked orientation, as described below.

As used herein, an object that is displayed in a body locked orientation in a three-dimensional environment has a distance and orientation offset relative to a portion of the user's body (e.g., the user's torso). For example, if the user rotates their torso (irrespective of any head rotation) in the yaw direction, the body locked object would follow the torso rotation and be repositioned within the three-dimensional environment such that it is the same distance and orientation offset relative to the user's torso as before the torso rotation. Alternatively, in some examples, a body locked object has a fixed distance from the user without the orientation of the content being referenced to any portion of the user's body (e.g., may be displayed in the same cardinal direction relative to the user, regardless of head and/or body movement). For example, the body locked object would not reposition itself in accordance with the torso rotation in the yaw direction (e.g., the body locked object would remain the same distance offset relative to the user's torso but would not be repositioned to have the same orientation offset relative to the user's torso). Additionally or alternatively, in some examples, the body locked object may be configured to always remain gravity or horizon (e.g., normal to gravity) aligned, such that head and/or body changes in the roll direction would not cause the body locked object to move within the three-dimensional environment. Rather, translational movement in either configuration would cause the body locked object to be repositioned within the three-dimensional environment to maintain the distance offset.

As used herein, an object that is displayed in a head locked orientation in a three-dimensional environment has a distance and orientation offset relative to the user's head. In some examples, a head locked object moves within the three-dimensional environment as the user's head moves (as the viewpoint of the user changes). For example, if the user rotates their head (e.g., clockwise or counterclockwise) in the yaw direction, the head locked object would follow the head rotation and be repositioned within the three-dimensional environment such that it is the same distance and orientation offset relative to the user's head as before the head rotation.

As used herein, an object that is displayed in a world locked orientation in a three-dimensional environment does not have a distance or orientation offset relative to the user. For example, a world locked object remains displayed at the same location in the three-dimensional environment and with the same orientation irrespective of any movement of the user's head and/or torso (e.g., in the yaw, roll, and/or pitch directions).

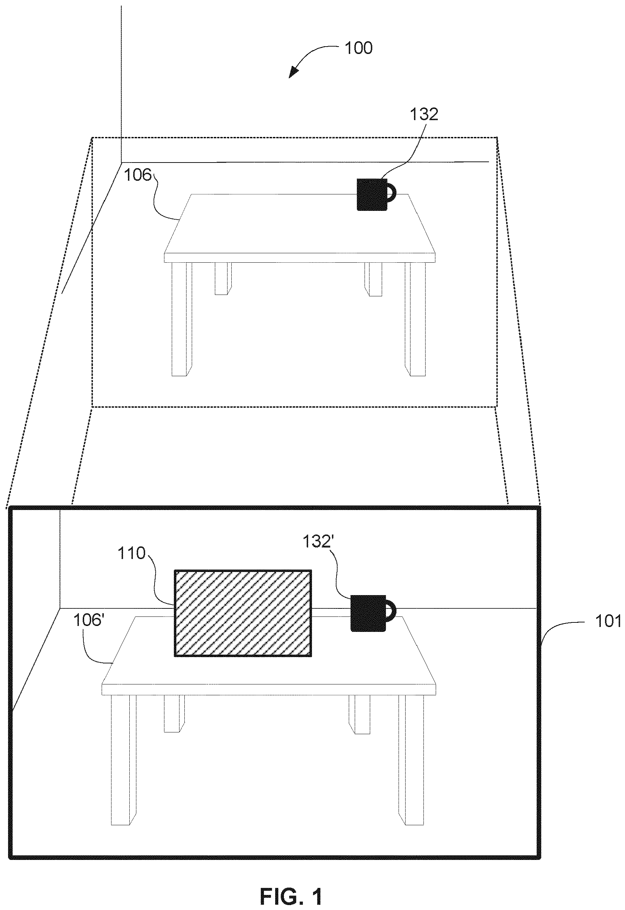

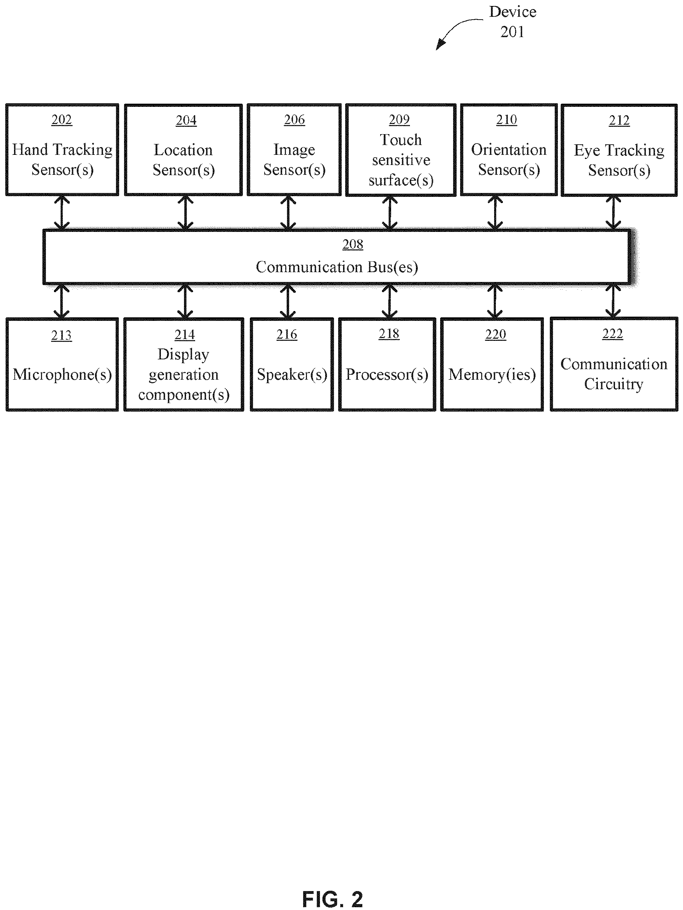

FIG. 1 illustrates an electronic device 101 presenting an extended reality (XR) environment (e.g., a computer-generated environment) according to some examples of the disclosure. In some examples, electronic device 101 is a hand-held or mobile device, such as a tablet computer, laptop computer, smartphone, or head-mounted display. Examples of device 101 are described below with reference to the architecture block diagram of FIG. 2. As shown in FIG. 1, electronic device 101, table 106, and coffee mug 132 are located in the physical environment 100. The physical environment may include physical features such as a physical surface (e.g., floor, walls) or a physical object (e.g., table, lamp, etc.). In some examples, electronic device 101 may be configured to capture images of physical environment 100 including table 106 and coffee mug 132 (illustrated in the field of view of electronic device 101). In some examples, in response to a trigger, the electronic device 101 may be configured to display a virtual object 110 (e.g., two-dimensional virtual content, such as a two-dimensional user interface) in the computer-generated environment (e.g., represented by a rectangle illustrated in FIG. 1) that is not present in the physical environment 100, but is displayed in the computer-generated environment positioned on (e.g., anchored to) the top of a computer-generated representation 106' of real-world table 106. For example, virtual object 110 can be displayed on the surface of the computer-generated representation 106' of the table in the computer-generated environment next to the computer-generated representation 132' of real-world coffee mug 132 displayed via electronic device 101 in response to detecting the planar surface of table 106 in the physical environment 100.

It should be understood that virtual object 110 is a representative virtual object and one or more different virtual objects (e.g., of various dimensionality such as two-dimensional or other three-dimensional virtual objects) can be included and rendered in a three-dimensional computer-generated environment. For example, the virtual object can represent an application or a user interface displayed in the computer-generated environment. In some examples, the virtual object can represent content corresponding to the application and/or displayed via the user interface in the computer-generated environment. In some examples, the virtual object 110 is optionally configured to be interactive and responsive to user input, such that a user may virtually touch, tap, move, rotate, or otherwise interact with, the virtual object 110. In some examples, while the virtual object 110 is displayed in the three-dimensional environment, the electronic device selectively moves the virtual object 110 in response to movement of a viewpoint of the user. Additionally, it should be understood, that the 3D environment (or 3D virtual object) described herein may be a representation of a 3D environment (or three-dimensional virtual object) projected or presented at an electronic device.

In the discussion that follows, an electronic device that is in communication with a display generation component and one or more input devices is described. It should be understood that the electronic device optionally is in communication with one or more other physical user-interface devices, such as a touch-sensitive surface, a physical keyboard, a mouse, a joystick, a hand tracking device, an eye tracking device, a stylus, etc. Further, as described above, it should be understood that the described electronic device, display and touch-sensitive surface are optionally distributed amongst two or more devices. Therefore, as used in this disclosure, information displayed on the electronic device or by the electronic device is optionally used to describe information outputted by the electronic device for display on a separate display device (touch-sensitive or not). Similarly, as used in this disclosure, input received on the electronic device (e.g., touch input received on a touch-sensitive surface of the electronic device, or touch input received on the surface of a stylus) is optionally used to describe input received on a separate input device, from which the electronic device receives input information.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, a television channel browsing application, and/or a digital video player application.

FIG. 2 illustrates a block diagram of an exemplary architecture for a device 201 according to some examples of the disclosure. In some examples, device 201 includes one or more electronic devices. For example, the electronic device 201 may be a portable device, such as a mobile phone, smart phone, a tablet computer, a laptop computer, an auxiliary device in communication with another device, a head-mounted display, etc., respectively.

As illustrated in FIG. 2, the electronic device 201 optionally includes various sensors (e.g., one or more hand tracking sensor(s) 202, one or more location sensor(s) 204, one or more image sensor(s) 206, one or more touch-sensitive surface(s) 209, one or more motion and/or orientation sensor(s) 210, one or more eye tracking sensor(s) 212, one or more microphone(s) 213 or other audio sensors, etc.), one or more display generation component(s) (e.g., displays) 214, one or more speaker(s) 216, one or more processor(s) 218, one or more memories 220, and/or communication circuitry 222. One or more communication buses 208 are optionally used for communication between the above-mentioned components of electronic devices 201.

Communication circuitry 222 optionally includes circuitry for communicating with electronic devices, networks, such as the Internet, intranets, a wired network and/or a wireless network, cellular networks, and wireless local area networks (LANs). Communication circuitry 222 optionally includes circuitry for communicating using near-field communication (NFC) and/or short-range communication, such as Bluetooth^{®}.

Processor(s) 218 include one or more general processors, one or more graphics processors, and/or one or more digital signal processors. In some examples, memory 220 is a non-transitory computer-readable storage medium (e.g., flash memory, random access memory, or other volatile or non-volatile memory or storage) that stores computer-readable instructions configured to be executed by processor(s) 218 to perform the techniques, processes, and/or methods described below. In some examples, memory 220 can include more than one non-transitory computer-readable storage medium. A non-transitory computer-readable storage medium can be any medium (e.g., excluding a signal) that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on CD, DVD, or Blu-ray technologies, as well as persistent solid-state memory such as flash, solid-state drives, and the like.

In some examples, display generation component(s) 214 include a single display (e.g., a liquid-crystal display (LCD), organic light-emitting diode (OLED), or other types of display). In some examples, display generation component(s) 214 includes multiple displays. In some examples, display generation component(s) 214 can include a display with touch capability (e.g., a touch screen), a projector, a holographic projector, a retinal projector, etc. In some examples, electronic device 201 includes touch-sensitive surface(s) 209, respectively, for receiving user inputs, such as tap inputs and swipe inputs or other gestures. In some examples, display generation component(s) 214 and touch-sensitive surface(s) 209 form touch-sensitive display(s) (e.g., a touch screen integrated with electronic device 201 or external to electronic device 201 that is in communication with electronic device 201).

Electronic device 201 optionally includes image sensor(s) 206. Image sensors(s) 206 optionally include one or more visible light image sensors, such as charged coupled device (CCD) sensors, and/or complementary metal-oxide-semiconductor (CMOS) sensors operable to obtain images of physical objects from the real-world environment. Image sensor(s) 206 also optionally include one or more infrared (IR) sensors, such as a passive or an active IR sensor, for detecting infrared light from the real-world environment. For example, an active IR sensor includes an IR emitter for emitting infrared light into the real-world environment. Image sensor(s) 206 also optionally include one or more cameras configured to capture movement of physical objects in the real-world environment. Image sensor(s) 206 also optionally include one or more depth sensors configured to detect the distance of physical objects from electronic device 201. In some examples, information from one or more depth sensors can allow the device to identify and differentiate objects in the real-world environment from other objects in the real-world environment. In some examples, one or more depth sensors can allow the device to determine the texture and/or topography of objects in the real-world environment.

In some examples, electronic device 201 uses CCD sensors, event cameras, and depth sensors in combination to detect the physical environment around electronic device 201. In some examples, image sensor(s) 206 include a first image sensor and a second image sensor. The first image sensor and the second image sensor work in tandem and are optionally configured to capture different information of physical objects in the real-world environment. In some examples, the first image sensor is a visible light image sensor and the second image sensor is a depth sensor. In some examples, electronic device 201 uses image sensor(s) 206 to detect the position and orientation of electronic device 201 and/or display generation component(s) 214 in the real-world environment. For example, electronic device 201 uses image sensor(s) 206 to track the position and orientation of display generation component(s) 214 relative to one or more fixed objects in the real-world environment.

In some examples, electronic device 201 includes microphone(s) 213 or other audio sensors. Electronic device 201 optionally uses microphone(s) 213 to detect sound from the user and/or the real-world environment of the user. In some examples, microphone(s) 213 includes an array of microphones (a plurality of microphones) that optionally operate in tandem, such as to identify ambient noise or to locate the source of sound in space of the real-world environment.

Electronic device 201 includes location sensor(s) 204 for detecting a location of electronic device 201 and/or display generation component(s) 214. For example, location sensor(s) 204 can include a GPS receiver that receives data from one or more satellites and allows electronic device 201 to determine the device's absolute position in the physical world.

Electronic device 201 includes orientation sensor(s) 210 for detecting orientation and/or movement of electronic device 201 and/or display generation component(s) 214. For example, electronic device 201 uses orientation sensor(s) 210 to track changes in the position and/or orientation of electronic device 201 and/or display generation component(s) 214, such as with respect to physical objects in the real-world environment. Orientation sensor(s) 210 optionally include one or more gyroscopes and/or one or more accelerometers.

Electronic device 201 includes hand tracking sensor(s) 202 and/or eye tracking sensor(s) 212, in some examples. Hand tracking sensor(s) 202 are configured to track the position/location of one or more portions of the user's hands, and/or motions of one or more portions of the user's hands with respect to the extended reality environment, relative to the display generation component(s) 214, and/or relative to another defined coordinate system. Eye tracking sensor(s) 212 are configured to track the position and movement of a user's gaze (eyes, face, or head, more generally) with respect to the real-world or extended reality environment and/or relative to the display generation component(s) 214. In some examples, hand tracking sensor(s) 202 and/or eye tracking sensor(s) 212 are implemented together with the display generation component(s) 214. In some examples, the hand tracking sensor(s) 202 and/or eye tracking sensor(s) 212 are implemented separate from the display generation component(s) 214.

In some examples, the hand tracking sensor(s) 202 can use image sensor(s) 206 (e.g., one or more IR cameras, 3D cameras, depth cameras, etc.) that capture three-dimensional information from the real-world including one or more hands (e.g., of a human user). In some examples, the hands can be resolved with sufficient resolution to distinguish fingers and their respective positions. In some examples, one or more image sensor(s) 206 are positioned relative to the user to define a field of view of the image sensor(s) 206 and an interaction space in which finger/hand position, orientation and/or movement captured by the image sensors are used as inputs (e.g., to distinguish from a user's resting hand or other hands of other persons in the real-world environment). Tracking the fingers/hands for input (e.g., gestures, touch, tap, etc.) can be advantageous in that it does not require the user to touch, hold or wear any sort of beacon, sensor, or other marker.

In some examples, eye tracking sensor(s) 212 includes at least one eye tracking camera (e.g., infrared (IR) cameras) and/or illumination sources (e.g., IR light sources, such as LEDs) that emit light towards a user's eyes. The eye tracking cameras may be pointed towards a user's eyes to receive reflected IR light from the light sources directly or indirectly from the eyes. In some examples, both eyes are tracked separately by respective eye tracking cameras and illumination sources, and a focus/gaze can be determined from tracking both eyes. In some examples, one eye (e.g., a dominant eye) is tracked by a respective eye tracking camera/illumination source(s).

Electronic device 201 is not limited to the components and configuration of FIG. 2, but can include fewer, other, or additional components in multiple configurations. In some examples, device 201 can be implemented between two electronic devices (e.g., as a system). A person or persons using electronic device 201, is optionally referred to herein as a user or users of the device.

Attention is now directed towards interactions with one or more virtual objects (e.g., one or more user interfaces) that are displayed in a three-dimensional environment (e.g., an extended reality environment) presented at an electronic device (e.g., corresponding to electronic device 201). As discussed below, the one or more virtual objects may be associated with a navigation (or other type of) application operating on the electronic device. In some examples, the electronic device selectively changes a visual state (e.g., including a visual appearance of) the one or more virtual objects in the three-dimensional environment in response to detecting movement of a viewpoint of a user of the electronic device. As described below, movement of the viewpoint of the user optionally causes the display generation component (e.g., display generation component(s) 214) to move within the physical environment surrounding the electronic device, which causes the portion of the physical environment and/or the three-dimensional environment displayed via the display generation component to be updated in accordance with the movement of the viewpoint.

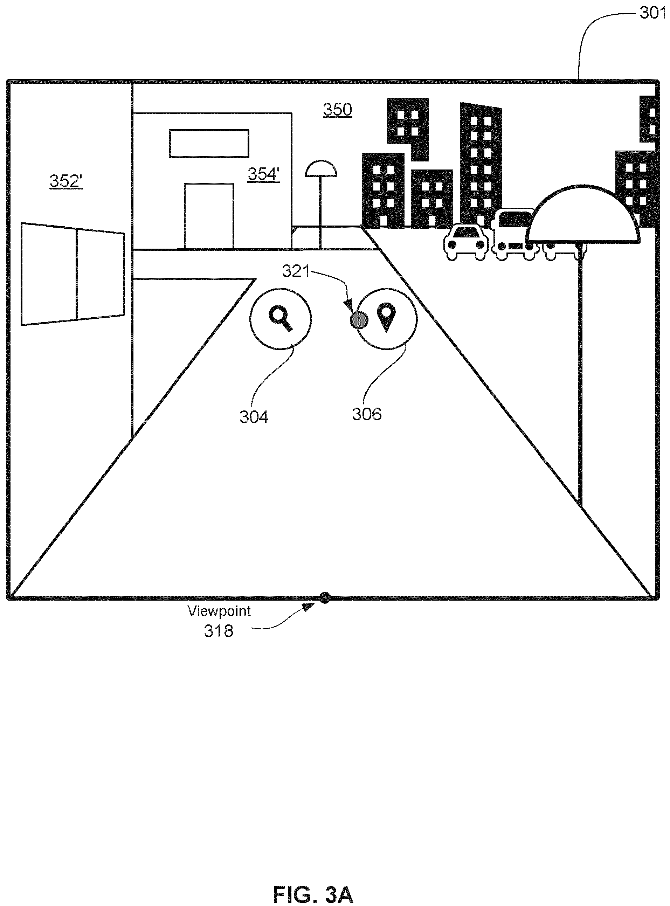

FIGs. 3A-3I illustrate example interactions involving virtual user interfaces in an extended reality environment according to some examples of the disclosure. In some examples, electronic device 301 may present a three-dimensional environment (e.g., an extended reality environment) 350. The electronic device 301 may be similar to device 101 or 201 discussed above, and/or may be a head mountable system/device and/or projection-based system/device (including a hologram-based system/device) configured to generate and present a three-dimensional environment, such as, for example, heads-up displays (HUDs), head mounted displays (HMDs), windows having integrated display capability, or displays formed as lenses designed to be placed on a person's eyes (e.g., similar to contact lenses). In the example of FIGs. 3A-3I, a user is optionally wearing the electronic device 301, such that the three-dimensional environment 350 can be defined by X, Y and Z axes as viewed from a perspective of the electronic device (e.g., a viewpoint associated with the user of the electronic device 301). Accordingly, as used herein, the electronic device 301 is configured to be movable with six degrees of freedom based on the movement of the user (e.g., the head of the user), such that the electronic device 301 may be moved in the roll direction, the pitch direction, and/or the yaw direction.

As shown in FIG. 3A, the electronic device 301 may be positioned in a physical environment (e.g., an outdoors environment) that includes a plurality of real-world objects. For example, in FIG. 3A, the electronic device 301 may be positioned in a city environment that includes a plurality of buildings, sidewalks, roads, cars, streetlamps, and the like (e.g., the user of the electronic device 301 is standing on a sidewalk in the physical city environment). Accordingly, in some examples, the three-dimensional environment 350 presented using the electronic device 301 optionally includes captured portions of the physical environment surrounding the electronic device 301, such as a representation of a first building 352' and a representation of a second building 354', wherein the representation of the first building 352' is located closer to the viewpoint 318 of the user than the representation of the second building 354' in the field of view of the three-dimensional environment 350. Additionally, as shown in Fig. 3A, the three-dimensional environment 350 may include representations of the sidewalks, roads, cars, and streetlamps of the city environment in which the electronic device 301 is located. In some examples, the representations can include portions of the physical environment viewed through a transparent or translucent display of electronic device 301.

In some examples, the three-dimensional environment 350 may include one or more user interface objects. For example, as shown in FIG. 3A, the electronic device 301 is displaying a first option 304 (e.g., a first selectable button) and a second option 306 (e.g., a second selectable button). In some examples, the first option 304 and the second option 306 may be associated with a respective application running on the electronic device 301. For example, in FIG. 3A, the first option 304 and the second option 306 may be associated with a navigation application running on the electronic device 301. As described herein, the navigation application utilizes GPS technology to provide the user with contextual information regarding locations proximate to the user (e.g., businesses, stores, restaurants, coffee shops, etc. in the user's vicinity) and to enable to the user to navigate (e.g., by providing the user with turn-by-turn directions) to a particular destination in the physical environment surrounding the user. In some examples, the first option 304 is selectable to initiate display of a virtual map user interface associated with the navigation application and the second option 306 is selectable to initiate display of a search user interface associated with the navigation application, as described in more detail below.

In some examples, as mentioned above, the first option 304 and/or the second option 306 are user selectable. For example, the electronic device 301 activates/selects the first option 304 and/or the second option 306 in response to detecting user input (e.g., direct or indirect input) directed to the first option 304 and/or the second option 306. In some examples, the navigation application is configured to respond to hands-free user input, such as gaze-based user input. For example, in FIG. 3A, a gaze of the user, represented by gaze point 321, is directed toward the second option 306 in the three-dimensional environment 350. In some examples, as discussed below, the electronic device 301 activates the second option 306 in response to detecting the gaze of the user directed to the second option 306 for a threshold amount of time, such as 0.25, 0.5, 1, 1.5, 2, 3, 4, 5, 8, or 10 seconds (e.g., in response to detecting a gaze and dwell of the gaze point 321). Additionally, it should be understood that, in some examples, the navigation application is configured to respond to input that includes hand gestures. For example, while the gaze of the user is directed to the second option 306 in FIG. 3A, the electronic device 301 activates the second option 306 in response to detecting a pinch gesture (e.g., in which an index finger and thumb of a hand of the user come together and make contact) and/or a tap/touch gesture (e.g., in which a finger, such as the index finger, of the hand of the user directly taps/touches the second option 306). Additionally or alternatively, in some examples, the navigation application is configured to respond to input that only includes hand gestures (e.g., independent of gaze location). For example, the electronic device 301 activates the second option 306 in response to detecting a first hand of the user provide a pinch gesture or a tap/touch gesture optionally while a second hand of the user points at the second option 306.

In some examples, while the three-dimensional environment 350 is presented at the electronic device 301, a viewpoint 318 of the three-dimensional environment 350 and/or a location of the viewpoint of the user optionally changes in accordance with movement/rotation of the electronic device 301 (e.g., by the user of the electronic device 301). For example, while the three-dimensional environment 350 is displayed, if the electronic device 301 is moved closer toward the representation of the first building 352' and/or the representation of the second building 354' (e.g., because the user of the electronic device 301 moved forward in the physical environment surrounding the electronic device 301), the viewpoint 318 of the user of the electronic device 301 would change accordingly, such that the representation of the first building 352' and the representation of the second building 354' appear larger in the field of view of three-dimensional environment 350. Similarly, if the electronic device 301 moves rightward in the physical environment (e.g., because the user of the electronic device 301 moved rightward in the physical environment surrounding the electronic device 301), the viewpoint 318 of the user of the electronic device 301 would change accordingly, such that the representation of the first building 352' and the representation of the second building 354' appear farther to the left in the field of view of the three-dimensional environment 350 relative to the viewpoint 318 of the user (and/or optionally outside of the field of view of the three-dimensional environment 350).

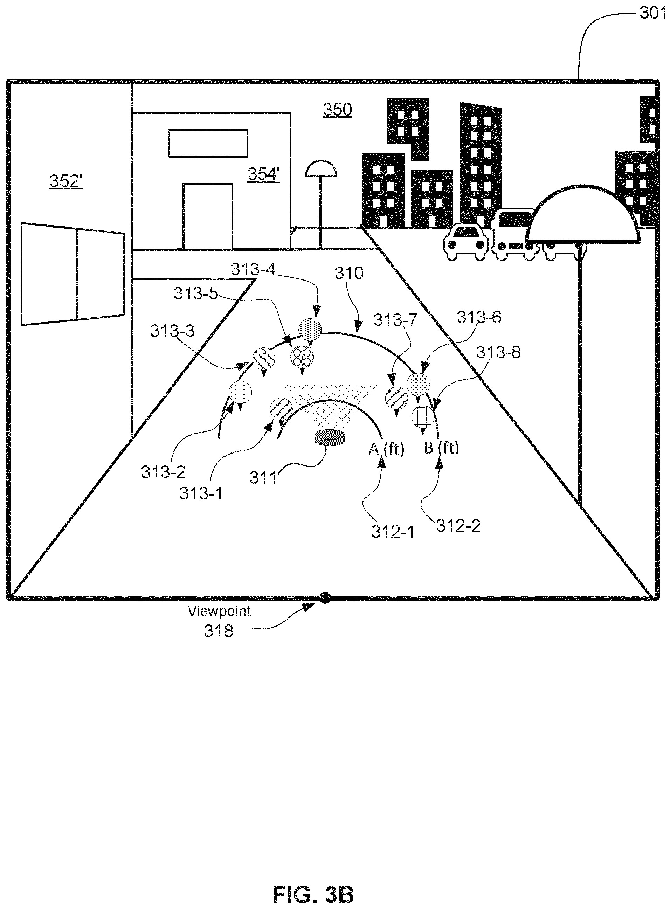

In some examples, as shown in FIG. 3B, in response to detecting a selection of the second option 306 (e.g., in response to the gaze of the user being directed to the second option 306 (e.g., for the threshold amount of time)), the electronic device 301 displays virtual map user interface 310 in the three-dimensional environment 350. For example, as shown in FIG. 3B, the electronic device 301 replaces display of the first option 304 and the second option 306 with the virtual map user interface 310 in the three-dimensional environment 350. In some examples, as shown in FIG. 3B, the virtual map user interface 310 includes a plurality of visual indications 313 corresponding to locations (e.g., businesses, restaurants, shops, coffee shops, etc.) that are proximate to a current location of the user in the physical environment. For example, the virtual map user interface 310 includes visual indications corresponding to locations that are within a threshold distance (e.g., 25, 30, 45, 50, 75, 100, 150, 200, 300, 400, 500, or 750 feet) of the current location of the user in the physical environment. As shown in the example of FIG. 3B, there are eight known locations that are proximate to the current location of the user, notably a first location represented by a first visual indication 313-1, a second location represented by a second visual indication 313-2, a third location represented by a third visual indication 313-3, a fourth location represented by a fourth visual indication 313-4, a fifth location represented by a fifth visual indication 313-5, a sixth location represented by a sixth visual indication 313-6, a seventh location represented by a seventh visual indication 313-7, and an eight location represented by an eighth visual indication 313-8. Additionally, as shown in FIG. 3B, the virtual map user interface 310 includes a visual indication 311 of the current location of the user in the physical environment (e.g., the location of the electronic device 301 in the physical environment). As shown in FIG. 3B, the visual indication 311 is optionally displayed with a representation of a heading of the user (e.g., a heading of the electronic device 301), which is pointed forward in the three-dimensional environment 350 (e.g., corresponding to the user's forward facing orientation in FIG. 3B).

Additionally or alternatively, in some examples, the plurality of visual indications 313 need not be displayed for locations that are proximate to the current location of the user in the physical environment in all directions. For example, the electronic device 301 may display visual indications in the virtual map user interface 310 that correspond to locations in the user's physical environment that are spatially located directly ahead of the user (e.g., in front of the user's current location) and/or to a side of the user (e.g., in front of and to the left or right of the user's current location).

In some examples, the plurality of visual indications 313 are displayed in the virtual map user interface 310 at respective positions that correspond to positions of the plurality of locations in the physical environment relative to the current location of the user. For example, the first location (e.g., indicated in the virtual map user interface 310 by the first visual indication 313-1) may be located in the first building (e.g., represented by representation 352') in the physical environment surrounding the user. As shown in FIG. 3B, the representation of the first building 352' is optionally located to the left of the user's current location in the three-dimensional environment 350 (e.g., to the left of the viewpoint 318). Accordingly, in the virtual map user interface 310 in FIG. 3B, the first visual indication 313-1 corresponding to the first location is located to the left of the visual indication 311 of the current location of the user. Similarly, in the example of FIG. 3B, the fifth location (e.g., indicated in the virtual map user interface 310 by the fifth visual indication 313-5) may be located in the second building (e.g., represented by representation 354') in the physical environment surrounding the user. As shown in FIG. 3B, the representation of the second building 354' is optionally located ahead of the user's current location in the three-dimensional environment 350 (e.g., further forward from the viewpoint 318). Accordingly, in the virtual map user interface 310 in FIG. 3B, the fifth visual indication 313-5 corresponding to the fifth location is located forward and ahead of the visual indication 311 of the current location of the user.

Additionally, in some examples, as shown in FIG. 3B, the plurality of visual indications 313 corresponding to the plurality of locations includes graphical representations (e.g., icons including illustrations, patterns, shading, images, video clips, etc.) indicating a category associated with the plurality of locations. For example, in the virtual map user interface 310 in FIG. 3B, the second visual indication 313-2 and the sixth visual indication 313-6 have a same/similar graphical representation (e.g., represented by the dotted pattern in the example of FIG. 3B), indicating that the second location and the sixth location in the physical environment are associated with a same first category (e.g., a same type of business, shop, or store, such as a coffee shop). Similarly, as shown in FIG. 3B, the first visual indication 313-1 and the seventh visual indication 313-7 have a same/similar graphical representation (e.g., represented by the leftward diagonal line pattern in the example of FIG. 3B), indicating that the first location and the seventh location in the physical environment are associated with a same second category, different from the first category above.

In some examples, as shown in FIG. 3B, the virtual map user interface 310 further includes one or more textual elements 312 that express a unit of measure of proximal and distal bounds of an area of the physical environment represented by the virtual map user interface 310. For example, in FIG. 3B, the virtual map user interface 310 includes a first textual element 312-1 ("A") delineating a proximal bound in distance relative to the current location of the user and a second textual element 312-2 ("B") delineating a distal bound in distance in FIG. 3B) relative to the current location of the user. As an example, the proximal bound delineated by the first textual element 312-1 may be a first distance (e.g., distance in feet ("ft"), such as 1, 2, 3, 5, 10, 15, 20, or 30 feet) from the current location of the user (e.g., represented by the visual indication 311) and the distal bound delineated by the second textual element 312-2 may be a second distance (e.g., distance in feet ("ft"), such as 100, 150, 200, 250, 275, 300, 500, 550, 600, 700, or 800 feet), greater than the first distance, from the current location of the user. Accordingly, in FIG. 3B, the plurality of visual indications 313-3 corresponding to the plurality of locations are included in the virtual map user interface 310 because the plurality of locations is within the second distance (corresponding to the threshold distance discussed above) of the current location of the user in the physical environment. Additionally, the plurality of visual indications 313 are displayed in the virtual map user interface 310 at respective distances from the visual indication 311 that correspond to distances between the plurality of locations in the physical environment and the current location of the user. For example, as similarly discussed above, the first location (e.g., indicated in the virtual map user interface 310 by the first visual indication 313-1) may be located in the first building (e.g., represented by representation 352') in the physical environment surrounding the user. As shown in FIG. 3B, the representation of the first building 352' is optionally located a first respective distance from the user's current location in the three-dimensional environment 350 (e.g., from the viewpoint 318). Accordingly, in the virtual map user interface 310 in FIG. 3B, the first visual indication 313-1 corresponding to the first location is located a second respective distance, based on the first respective distance, from the visual indication 311 of the current location of the user (e.g., the first location is located approximately the A distance from the current location of the user in the physical environment, so the first visual indication 313-1 is displayed near the proximal bound (e.g., delineated by the textual element 312-1) in the virtual map user interface 310). Additionally or alternatively, in some examples, the bounds delineated by the one or more textual elements 312 may be dynamically determined distance based on detected travel modality. For example, when the electronic device 301 detects the user is walking, the proximal and distal bounds, as represented in FIG. 3B, may correspond to distances that are smaller than those when the electronic device 301 detects the user is riding a bike or driving. It should be understood that, while the distances discussed above are provided in feet, in some examples, alternative units of measure are used to delineate the proximal and distal bounds of the virtual map user interface 310, such as yards, miles, centimeters, meters, kilometers, etc.

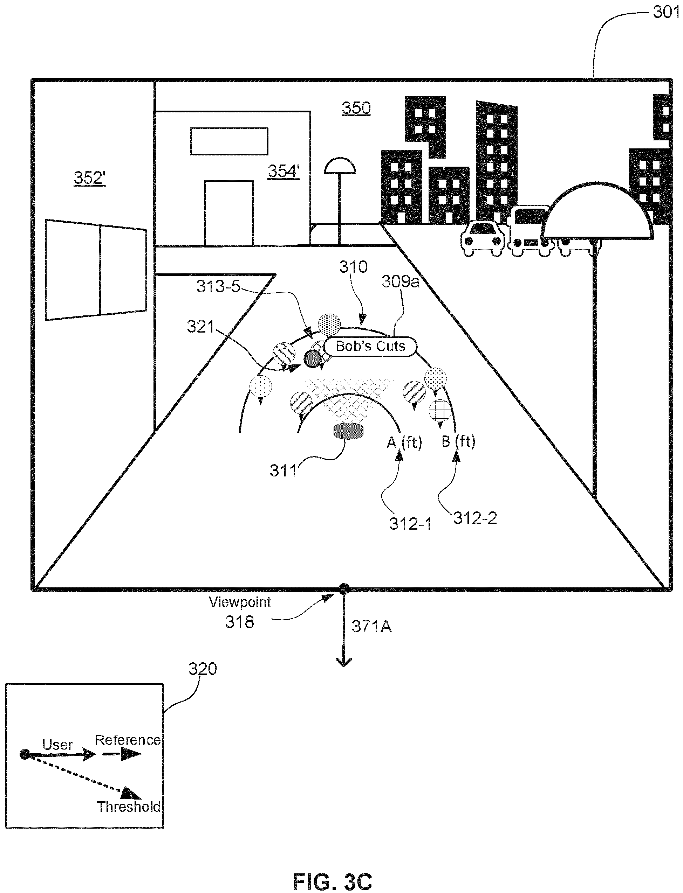

As mentioned previously above, the navigation application running on the electronic device 301 may be responsive to (e.g., hands-free) gaze-based interactions. Particularly, in some examples, the plurality of visual indications 313 of the virtual map user interface 310 are responsive to the gaze of the user. For example, as shown in FIG. 3C, the electronic device 301 detects the gaze of the user directed to the fifth visual indication 313-5 in the virtual map user interface 310. In some examples, the electronic device 301 detects the gaze point 321 directed to the fifth visual indication 313-5 for the threshold amount of time described above. In some examples, as shown in FIG. 3C, in response to detecting the gaze point 321 directed to the fifth visual indication 313-5 (or selection of fifth visual indication 313-5 using any of the other techniques discussed herein), the electronic device 301 displays information 309a corresponding to the fifth location in the virtual map user interface 310. For example, in FIG. 3C, the electronic device 301 displays the information 309a (e.g., as a text label) overlaid on the fifth visual indication 313-5. In some examples, the information 309a includes a name or title associated with the fifth location, such as the name of a business or shop ("Bob's Cuts"), as shown in FIG. 3C.

In some examples, the virtual map user interface 310 shown in FIGs. 3B-3C is configured to be displayed in one or more visual states in the three-dimensional environment 350. In FIGs. 3B-3C, the virtual map user interface 310 is optionally displayed in a first visual state in the three-dimensional environment 350. For example, displaying the virtual map user interface 310 in the first visual state includes displaying the visual indication 311 of the current location of the user, the first and the second textual elements 312-1 and 312-2, and the plurality of visual indications 313 corresponding to the plurality of locations in the physical environment surrounding the user. Additionally, in some examples, displaying the virtual map user interface 310 in the first visual state includes representing the plurality of locations with a first level of detail. For example, as discussed above with reference to FIG. 3B, the plurality of locations in the physical environment that are proximate to the user are represented on the virtual map user interface 310 via the plurality of visual indications 313. However, as shown in FIGs. 3B-3C, the virtual map user interface 310 does not include representations of the buildings in which the plurality of locations is located, representations of the roads and sidewalks in the physical environment surrounding the user, representations of grass areas (e.g., parks, lawns, etc.) or water areas (e.g., rivers, streams, lakes, etc.) in the physical environment surrounding the user, etc. In some examples, displaying the virtual map user interface 310 in the first visual state includes displaying the virtual map user interface 310 at a first orientation relative to the viewpoint 318 of the user in the three-dimensional environment 350. For example, in FIGs. 3B-3C, the virtual map user interface 310 may be displayed with an angle offset (e.g., 10, 20, 25, 30, 40, 45, or 50 degrees) relative to a vertical axis perpendicular to a forward ray that is extending from the viewpoint 318, such that the visual indication 311 and the plurality of visual indications 313 appear to visually protrude from (e.g., extend above) a surface of the virtual map user interface 310. In some examples, displaying the virtual map user interface 310 in the first visual state includes displaying the virtual map user interface 310 at a first size in the three-dimensional environment 350 (e.g., independent of the area of the physical environment represented by the virtual map user interface 310). As described herein, displaying the virtual map user interface 310 in the first visual state provides a benefit of enabling the user to visually understand the spatial relationship between the user's current location and the plurality of locations in the physical environment while not overly obscuring the user's view of the physical environment (e.g., visible in passthrough), which would otherwise be distracting and/or unsafe.

In some examples, the electronic device 301 selectively changes the visual state of the virtual map user interface 310 in the three-dimensional environment 350 based on movement of the viewpoint 318. For example, in FIGs. 3B-3C, the virtual map user interface 310 (including the visual indication 311 and the plurality of visual indications 313) may be head locked (defined above) in the three-dimensional environment 350. In some examples, because the virtual map user interface 310 is head locked, the virtual map user interface 310 is configured to move in the three-dimensional environment 350 in accordance with the movement of the viewpoint 318. In some examples, the electronic device 301 transitions between displaying the virtual map user interface 310 in the first visual state to displaying the virtual map user interface 310 to a second visual state, different from the first visual state, in the three-dimensional environment 350 in response to detecting movement of the viewpoint 318 of the user beyond a threshold movement (e.g., an angular threshold, as discussed in more detail below), as represented by "Threshold" arrow in legend 320, relative to a reference ray, as represented by "Reference" arrow in the legend 320, in the pitch direction. In some examples, if the movement of the viewpoint 318 does not exceed the threshold movement, the electronic device 301 maintains display of the virtual map user interface 310 in the first visual state.

In FIG. 3C, while the virtual map user interface 310 is displayed in the first visual state in the three-dimensional environment 350, the electronic device 301 optionally detects radial movement of the viewpoint 318 of the user. For example, as shown in FIG. 3C, the electronic device 301 is moved radially downward in the pitch direction, as represented by arrow 371A, in the physical environment surrounding the electronic device 301 (e.g., because the head of the user wearing the electronic device 301 moves downward in the pitch direction), which causes the display generation component of the electronic device 301 to also move downward in the physical environment. In some examples, the movement of the viewpoint 318 of the user corresponds to tilting of the head of the user toward the ground of the physical environment in which the electronic device 301 is located.

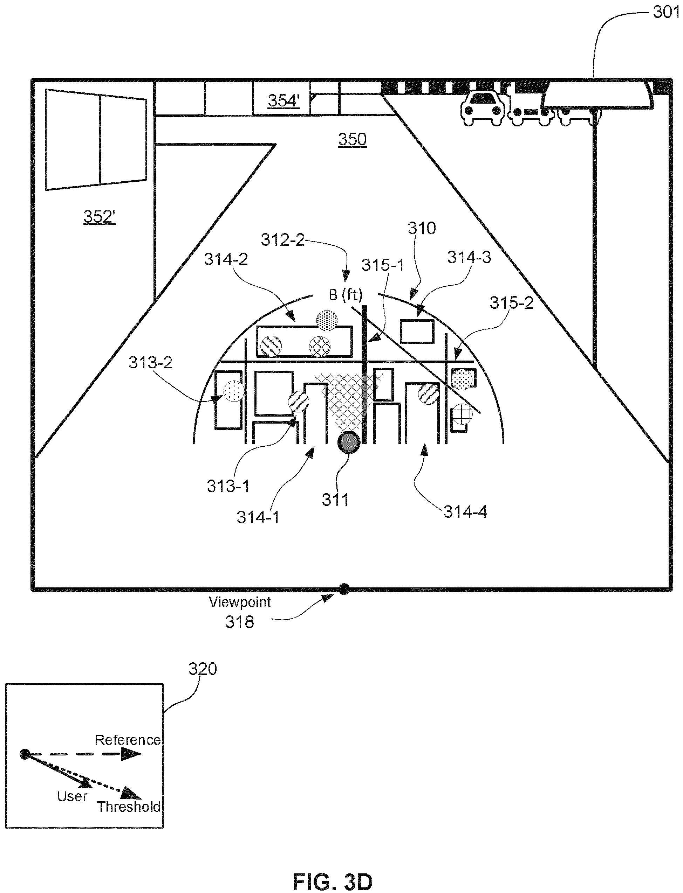

In some examples, as shown in FIG. 3D, in response to detecting the movement of the viewpoint 318 of the user of the electronic device 301, the electronic device 301 updates presentation of the three-dimensional environment 350. For example, as shown in FIG. 3D, the downward movement of the viewpoint 318 of the user causes the representation of the first building 352' and the representation of the second building 354' to be shifted upward in the view of the three-dimensional environment 350 relative to the new viewpoint 318 of the user. Additionally, because the viewpoint 318 has moved downward in the pitch direction, a greater portion of the ground (e.g., the sidewalk on which the user is positioned) of the physical environment is visible in the view of the three-dimensional environment 350, as shown in FIG. 3D.

In some examples, as previously mentioned above, in response to detecting the downward movement of the viewpoint 318 of the user, the electronic device 301 moves the virtual map user interface 310 in the three-dimensional environment 350 based on the movement of the viewpoint 318. For example, as shown in FIG. 3D, because the virtual map user interface 310 is head locked, the electronic device 301 moves the virtual map user interface 310 to maintain the same distance and orientation offset relative to the predefined portion of the user (e.g., the user's head) in the three-dimensional environment 350. As shown in FIG. 3D, the virtual map user interface 310 is optionally still displayed centrally in the user's field of view in the three-dimensional environment 350.

In some examples, as mentioned above, in response to detecting the movement of the viewpoint 318 of the user, if the movement of the viewpoint 318 exceeds a threshold movement, the electronic device 301 transitions from displaying the virtual map user interface 310 in the first visual state to displaying the virtual map user interface 310 in a second visual state, different from the first visual state. In some examples, the reference against which the threshold movement is measured corresponds to a ray intersecting the horizon of the field of view of the user (e.g., a ray extending away from the viewpoint 318 of the user straight toward a far point in the physical environment that is opposite the viewpoint 318). In some examples, the threshold movement is an angular threshold measured relative to the force of gravity. In some examples, as illustrated in the legend 320 in FIGs. 3C-3D, the reference ray is normal to the force of gravity. In some examples, the reference against which the threshold movement is measured is determined based on a calibration of the electronic device 301. For example, when the navigation application is first launched on the electronic device 301 (e.g., such as in FIG. 3A) or at some other time during operation, the electronic device 301 may prompt the user (e.g., visually (e.g., via visual cues, such as textual cues) and/or aurally (e.g., via audio output)) to look forward in the three-dimensional environment 350, as a user's natural (e.g., comfortable) forward-facing head elevation may not necessarily be normal to gravity.

In some examples, as mentioned above, the threshold movement corresponds to an angular threshold. For example, the movement of the viewpoint 318 exceeds the threshold movement if the electronic device 301 detects movement of the viewpoint 318 beyond -10, 15, 20, 25, 30, 35, etc. degrees in the pitch direction relative to the reference ray (e.g., illustrated in the legend 320). It should be understood that, in some examples, the threshold movement may correspond to additional or alternative thresholds, such as distance thresholds, time thresholds, speed thresholds, acceleration thresholds, jerk thresholds, or movements in other directions relative to the ray (e.g., yaw or roll), etc. In some examples, as shown in FIG. 3D, in response to detecting the movement of the viewpoint 318 clockwise in the pitch direction, the electronic device 301 determines that the movement of the viewpoint 318 exceeds the threshold movement (e.g., the angular threshold (Threshold) illustrated in the legend 320). For example, as illustrated by "User" arrow in the legend 320, the viewpoint 318 of the user is directed beyond the threshold ray in the legend 320. Accordingly, in some examples, in accordance with the determination that the movement of the viewpoint 318 exceeds the threshold movement, as shown in FIG. 3D, the electronic device 301 displays the virtual map user interface 310 in the second visual state, as discussed below.

As shown in FIG. 3D, displaying the virtual map user interface 310 in the second visual state in the three-dimensional environment 350 includes displaying the virtual map user interface 310 at a second level of detail, greater than the first level of detail discussed above. For example, as shown previously in FIG. 3C, when displaying the virtual map user interface 310 in the first visual state, the physical environment surrounding the user is represented through the plurality of visual indications 313 corresponding to the plurality of locations in the physical environment. As shown in FIG. 3D, displaying the virtual map user interface 310 in the second visual state includes displaying representations that were not displayed in the first visual state, such as representations of the geographic features (e.g., natural and man-made) of the physical environment surrounding the user, such as representations of buildings 314-1, 314-2, 314-3, and 314-4 and representations of roads 315-1 and 315-2, which are displayed concurrently with the plurality of visual indications 313 discussed previously above (or, in some examples, an alternative version of the plurality of visual indications 313 (e.g., having an alternative appearance)). In some examples, displaying the virtual map user interface 310 in the second visual state includes updating display of the one or more textual elements 312. For example, as shown previously in FIG. 3C, when displaying the virtual map user interface 310 in the first visual state, the virtual map user interface 310 includes the first textual element 312-1 delineating the proximal bound of the physical environment included in the virtual map user interface 310 and the second textual element 312-2 delineating the distal bound of the physical environment included in the virtual map user interface 310. As shown in FIG. 3D, displaying the virtual map user interface 310 in the second visual state optionally includes only displaying the second textual element 312-2 delineating the proximal bound of the physical environment included in the virtual map user interface 310. As described herein, displaying the virtual map user interface 310 in the second visual state provides a benefit of enabling the user to visually understand the spatial relationship between the user's current location and the plurality of locations, including information corresponding to geographical features, in the physical environment in instances when obscuring greater portions of the user's view of the physical environment (e.g., visible in passthrough) is more tolerable.

Additionally, in some examples, displaying the virtual map user interface 310 in the second visual state includes changing an orientation of the virtual map user interface 310 relative to the viewpoint 318. For example, as previously shown in FIG. 3C, when displaying the virtual map user interface 310 in the first visual state, the virtual map user interface 310 is displayed with an angle offset (e.g., 10, 20, 25, 30, 40, 45, or 50 degrees) relative to a vertical axis perpendicular to a forward ray that is extending from the viewpoint 318, such that the visual indication 311 and the plurality of visual indications 313 appear to visually protrude from (e.g., extend above) a surface of the virtual map user interface 310. As shown in FIG. 3D, displaying the virtual map user interface 310 in the second visual state includes displaying the virtual map user interface 310 aligned to (e.g. parallel to) the vertical axis discussed above, such that the visual indication 311, the plurality of visual indications 313, and the representations of the geographical features 314/315 appear to be visually flat from the viewpoint 318 (e.g., similar to an overhead view). In some examples, displaying the virtual map user interface 310 in the second visual state includes displaying the virtual map user interface at a second size, greater than the first size shown in FIG. 3C, in the three-dimensional environment 350 (e.g., independent of the area of the physical environment represented by the virtual map user interface 310).

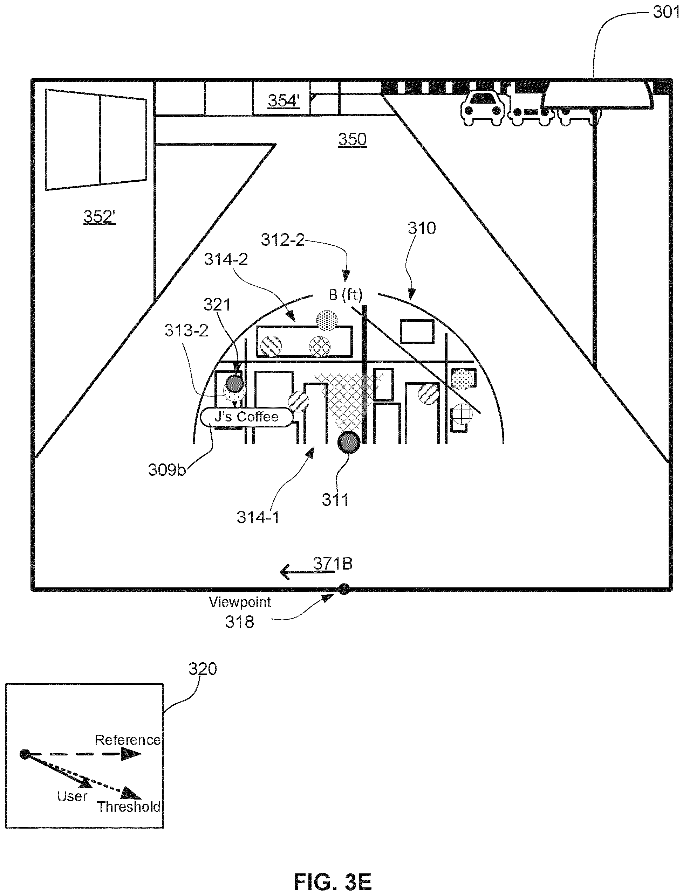

In some examples, as similarly described above, while displaying the virtual map user interface 310 in the second visual state, the plurality of visual indications 313 of the virtual map user interface 310 are responsive to the gaze (or other input, as discussed above) of the user. For example, as shown in FIG. 3E, the electronic device 301 detects the gaze of the user directed to the second visual indication 313-2 in the virtual map user interface 310. In some examples, as similarly discussed above, the electronic device 301 detects the gaze point 321 directed to the second visual indication 313-2 for the threshold amount of time described above. In some examples, as shown in FIG. 3E, in response to detecting the gaze point 321 directed to the second visual indication 313-2, the electronic device 301 displays information 309b corresponding to the second location in the virtual map user interface 310. For example, in FIG. 3E, the electronic device 301 displays the information 309b (e.g., as a text label) overlaid on or below the second visual indication 313-2. In some examples, as similarly discussed above, the information 309b includes a name or title associated with the second location, such as the name of a business or coffee shop ("J's Coffee"), as shown in FIG. 3E.

In FIG. 3E, while the virtual map user interface 310 is displayed in the second visual state in the three-dimensional environment 350, the electronic device 301 optionally detects rotational movement of the viewpoint 318 of the user. For example, as shown in FIG. 3E, the electronic device 301 is rotated leftward in the yaw direction, as represented by arrow 371B, in the physical environment surrounding the electronic device 301 (e.g., because the head of the user wearing the electronic device 301 rotates leftward (e.g., about the neck of the user) in the yaw direction), which causes the display generation component of the electronic device 301 to also rotate leftward in the physical environment.

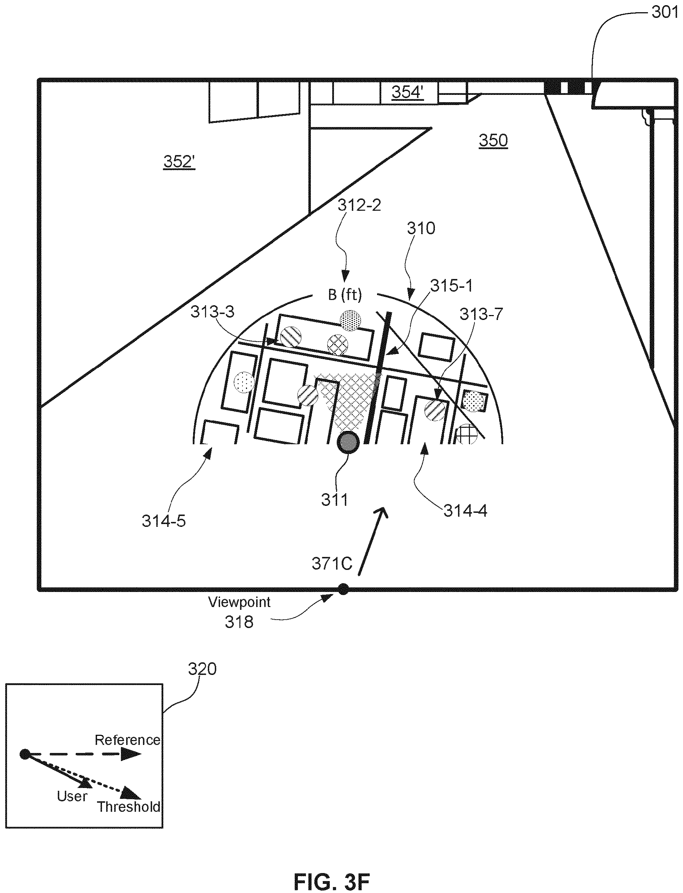

In some examples, as shown in FIG. 3F, in response to detecting the rotation of the viewpoint 318 of the user of the electronic device 301, the electronic device 301 updates presentation of the three-dimensional environment 350. For example, as shown in FIG. 3F, the leftward rotation of the viewpoint 318 of the user causes the representation of the first building 352' and the representation of the second building 354' to be shifted rightward in the view of the three-dimensional environment 350 relative to the new viewpoint 318 of the user. Additionally, because the viewpoint 318 has rotated leftward in the yaw direction, a greater portion of the ground (e.g., the sidewalk on which the user is positioned) of the physical environment and the representation of the first building 352' is visible in the view of the three-dimensional environment 350, as shown in FIG. 3F.

Additionally, in some examples, in response to detecting the rotation of the viewpoint 318 of the user of the electronic device 301, the electronic device 301 selectively updates display of the virtual map user interface 310. As indicated by the User arrow in the legend 320 of FIG. 3F, the direction of the viewpoint 318, which is determined by the elevation of the user's head, remains directed past the angular threshold (e.g., the head of the user remains angled toward the ground of the physical environment as shown in FIG. 3F) after the rotation of the viewpoint 318. Accordingly, as shown in FIG. 3F, the electronic device 301 optionally maintains display of the virtual map user interface 310 in the second visual state in the three-dimensional environment 350. Further, the electronic device 301 optionally updates display of the plurality of visual indications 313 and/or the representations of the geographical features 314/315 in accordance with the rotation of the viewpoint 318. For example, as discussed above, the viewpoint 318 is rotated leftward in the yaw direction, which causes the portions of the physical environment that are included (e.g., represented) in the three-dimensional environment 350 to shift rightward in the three-dimensional environment 350, as shown in FIG. 3F. Accordingly, the electronic device 301 optionally rotates the plurality of visual indications, such as the third visual indication 313-3 and the seventh visual indication 313-7, the representations of the graphical features, such as the representation of the building 314-4 and the representation of the road 315-1, clockwise relative to the visual indication 311 in accordance with the rotation of the viewpoint 318, as shown in FIG. 3F. Additionally, in some examples, updating the virtual map user interface 310 includes displaying additional or fewer elements in the virtual map user interface 310. For example, in FIG. 3F, when the virtual map user interface 310 is updated in accordance with the rotation of the viewpoint 318, an additional representation of building 314-5 is displayed in the virtual map user interface 310 (e.g., because the rotation of the viewpoint 318 causes the predetermined area of the physical environment that is represented by the virtual map user interface 310 to include a portion of the building designated by the representation 314-5). Additionally, as shown in FIG. 3F, when the virtual map user interface 310 is updated in accordance with the rotation of the viewpoint 318, a smaller portion of the representation of the building 314-4 is displayed in the virtual map user interface 310 (e.g., because the rotation of the viewpoint 318 causes the predetermined area of the physical environment that is represented by the virtual map user interface 310 to include less of the building designated by the representation 314-4).

In FIG. 3F, while the virtual map user interface 310 is displayed in the second visual state in the three-dimensional environment 350, the electronic device 301 optionally detects translation of the viewpoint 318 of the user. For example, as shown in FIG. 3F, the electronic device 301 is moved forward, as represented by arrow 371C, in the physical environment surrounding the electronic device 301 (e.g., because the user wearing the electronic device 301 moves forward in the physical environment), which causes the display generation component of the electronic device 301 to also move forward in the physical environment. In some examples, the translation of the viewpoint 318 of the user corresponds to the user walking forward along the sidewalk of the physical environment in which the electronic device 301 is located.

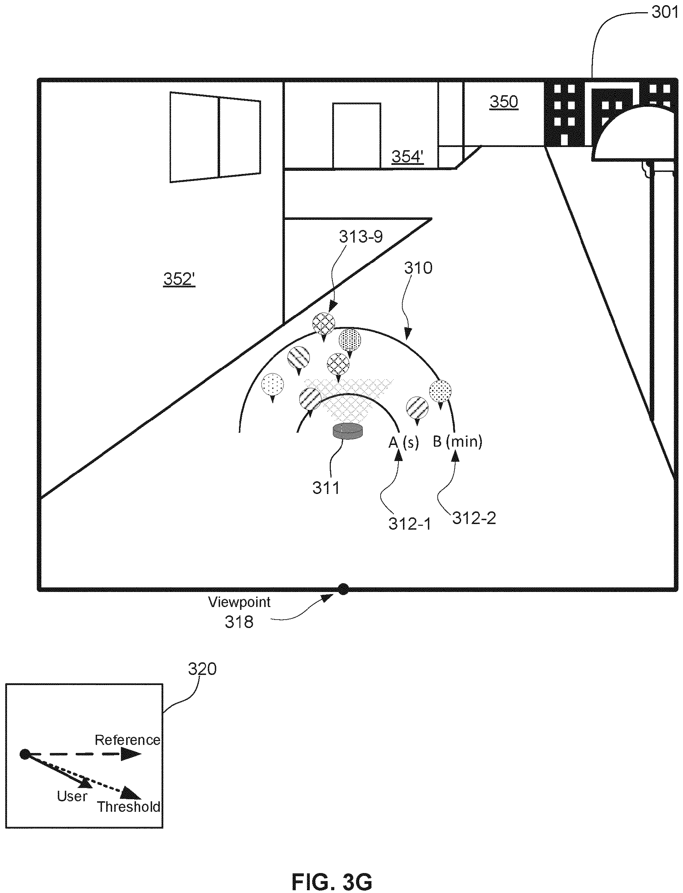

In some examples, as shown in FIG. 3G, in response to detecting the translation of the viewpoint 318 of the user, the electronic device 301 updates presentation of the three-dimensional environment 350. For example, as shown in FIG. 3G, the forward translation of the viewpoint 318 of the user causes the representation of the first building 352' and the representation of the second building 354' to be shifted forward in the view of the three-dimensional environment 350 relative to the new viewpoint 318 of the user. Additionally, because the viewpoint 318 has been translated forward in the three-dimensional environment, a greater portion of the representation of the second building 354' is visible in the view of the three-dimensional environment 350, as shown in FIG. 3G.

Additionally, in some examples, in response to detecting the translation of the viewpoint 318 of the user, the electronic device 301 selectively updates display of the virtual map user interface 310 in the three-dimensional environment 350. As indicated by the User arrow in the legend 320 of FIG. 3G, the direction of the viewpoint 318, which is determined by the elevation of the user's head, remains directed past the angular threshold (e.g., the head of the user remains angled toward the ground of the physical environment as shown in FIG. 3G) during the translation of the viewpoint 318. However, as shown in FIG. 3G, during the translation of the viewpoint 318 in the three-dimensional environment 350, the electronic device 301 transitions from displaying the virtual map user interface 310 in the second visual state back to displaying the virtual map user interface 310 in the first visual state discussed previously above. In some examples, the electronic device 301 displays the virtual map user interface 310 in the first visual state irrespective of the direction of the viewpoint 318 (e.g., irrespective of the elevation of the head of the user relative to the ground). Accordingly, as discussed above, despite the head of the user (and thus the viewpoint 318) being directed toward the ground of the physical environment that is visible in the three-dimensional environment 350, the electronic device 301 optionally transitions from displaying the virtual map user interface 310 in the second visual state to displaying the virtual map user interface 310 in the first visual state while the user walks/moves in the physical environment (while the viewpoint 318 is being translated).

In some examples, as similarly described above, the one or more textual elements 312 that are displayed in the virtual map user interface 310 may alternatively delineate bounds of the physical environment represented by the virtual map user interface 310 in units of time. For example, as shown in FIG. 3G, when the virtual map user interface 310 is redisplayed in the first visual state in the three-dimensional environment 350, the first textual element 312-1 and the second textual element 312-2 express the proximal and distal bounds discussed previously above in terms of travel time. As an example, the navigation application operating on the electronic device 301 determines the travel times based on a known (e.g., calculated) average walking speed of the user (e.g., based on past detected walking speeds of the user while the navigation application had been operating). In the example of FIG. 3G, the proximal bound delineated by the first textual element 312-1 may be a first travel time (e.g., time in seconds ("s"), such as 1, 2, 3, 5, 10, 15, 20, or 30 seconds) from the current location of the user (e.g., represented by the visual indication 311) and the distal bound delineated by the second textual element 312-2 may be a second travel time (e.g., time in minutes ("min"), such as 1, 2, 3, 5, 8, 10, 15, 20, 30, 60, or 90 minutes), greater than the first travel time, from the current location of the user.

Additionally, in some examples, as shown in FIG. 3G, the electronic device 301 updates display of the virtual map user interface 310 based on the translation of the viewpoint 318. For example, in FIG. 3G, because the user has walked forward in the physical environment (corresponding to forward translation of the viewpoint 318 in the three-dimensional environment 350), the electronic device 301 moves the plurality of visual indications 313 corresponding to the plurality of locations forward in the virtual map user interface 310 relative to the visual indication 311 (e.g., corresponding to the decrease in distance (or travel time) between the plurality of locations and the current location of the user in the physical environment). In some embodiments, as similarly discussed above, updating display of the virtual map user interface 310 based on the translation of the viewpoint 318 includes displaying additional or fewer visual indications 313 in the virtual map user interface 310. For example, as shown in FIG. 3G, the electronic device 301 displays a ninth visual indication 313-9 corresponding to a ninth location in the physical environment (e.g., because the ninth location is now within the bound delineated by the second textual element 312-2 (e.g., the ninth location is less than the B travel time from the current location of the user)). Further, in the example of FIG. 3G, the electronic device 301 ceases display of the eighth visual indication (313-8 in FIG. 3B) corresponding to the eighth location in the physical environment (e.g., because the eight location is now location behind the current location of the user as determined by the direction of the heading of the visual indication 311 in the virtual map user interface 310).

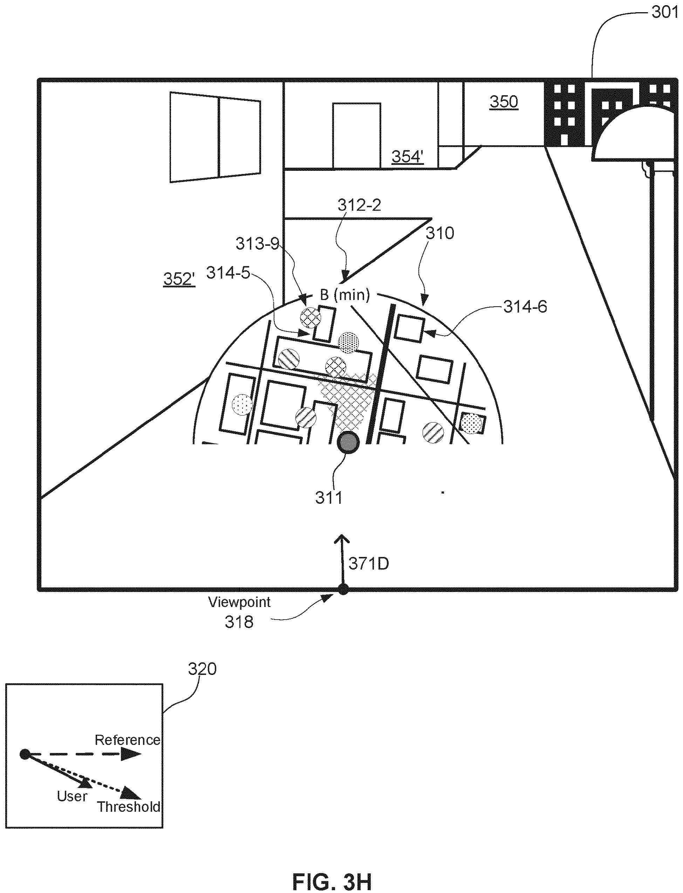

From FIGs. 3G-3H, the electronic device 301 detects an end of the translation of the viewpoint 318 in the three-dimensional environment 350. For example, the electronic device 301 detects the user of the electronic device 301 stops walking in the physical environment surrounding the user, which causes the display generation component of the electronic device 301 to stop moving (and thus causes the viewpoint 318 to stop being translated). As shown in FIG. 3H, the electronic device 301 detects the end of the translation of the viewpoint 318 while the direction of the viewpoint 318 remains oriented toward the ground of the physical environment (e.g., as shown in the legend 320 in FIG. 3H, the User arrow still extends below the Threshold arrow relative to the Reference).

In some examples, as shown in FIG. 3H, in response to detecting the end of the translation of the viewpoint 318, in accordance with the determination that the viewpoint 318 remains directed below the angular threshold discussed previously above, the electronic device 301 transitions from displaying the virtual map user interface 310 in the first visual state to displaying the virtual map user interface 310 in the second visual state in the three-dimensional environment 350. As shown in FIG. 3H, when the virtual map user interface 310 is displayed in the second visual state in the three-dimensional environment 350, the representations of the graphical features 314/315 are updated based on the translation of the viewpoint 318 discussed above with reference to FIG. 3G. For example, as shown in FIG. 3H, because the user walked forward in the physical environment in FIG. 3G, the virtual map user interface 310 includes additional representations of buildings 314, such as representation 314-5 and representation 314-6, which correspond to physical buildings in the physical environment surrounding the user that are now within the bound delineated by the textual element 312-2 (e.g., the physical buildings are less than the B travel time from the current location of the user).

In FIG. 3H, while the virtual map user interface 310 is displayed in the second visual state in the three-dimensional environment 350, the electronic device 301 detects radial movement of the viewpoint 318 of the user. For example, as shown in FIG. 3H, the electronic device 301 is moved radially upward in the pitch direction, as represented by arrow 371D, in the physical environment surrounding the electronic device 301 (e.g., because the head of the user wearing the electronic device 301 moves upward in the pitch direction), which causes the display generation component of the electronic device 301 to also move upward in the physical environment. In some examples, the movement of the viewpoint 318 of the user corresponds to tilting of the head of the user upward away from the ground of the physical environment in which the electronic device 301 is located.

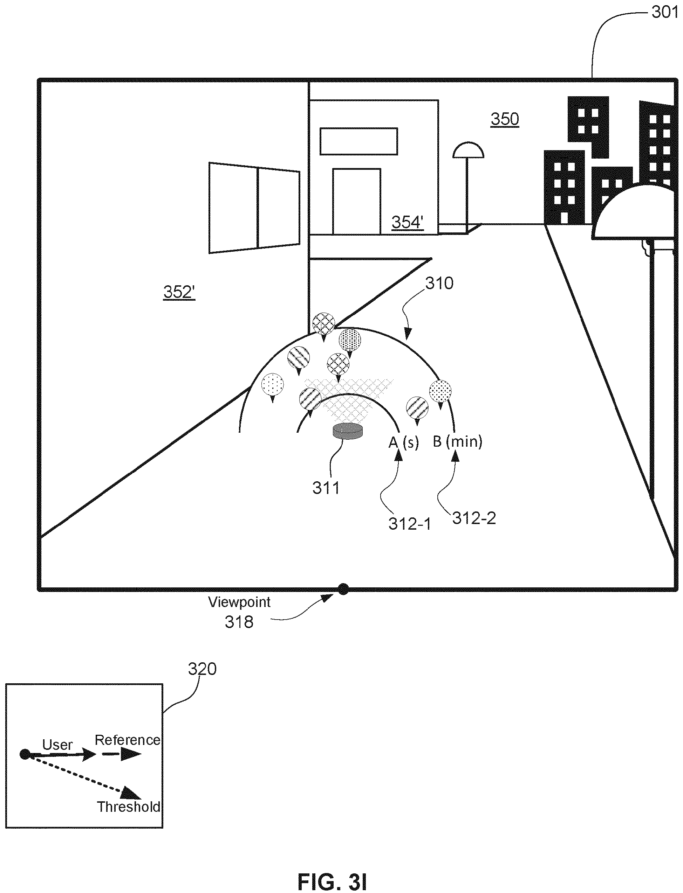

In some examples, as shown in FIG. 3I, in response to detecting the movement of the viewpoint 318 of the user of the electronic device 301, the electronic device 301 updates presentation of the three-dimensional environment 350. For example, as shown in FIG. 3I, the upward movement of the viewpoint 318 of the user causes the representation of the first building 352' and the representation of the second building 354' to be shifted downward in the view of the three-dimensional environment 350 relative to the new viewpoint 318 of the user. Additionally, because the viewpoint 318 has moved upward in the pitch direction, a smaller portion of the ground (e.g., the sidewalk on which the user is positioned) of the physical environment is visible in the view of the three-dimensional environment 350, as shown in FIG. 3I.

In some examples, as similarly discussed above, in response to detecting the upward movement of the viewpoint 318, the electronic device 301 determines whether the upward movement of the viewpoint 318 exceeds the movement threshold (e.g., the angular threshold) discussed above (e.g., relative to the force of gravity). For example, as shown in FIG. 3I, because the viewpoint 318, represented by the User ray in the legend 320, has moved upward toward the Reference ray relative to the force of gravity, the viewpoint 318 has crossed the angular threshold, represented by the Threshold ray in the legend 320. Accordingly, in some examples, the electronic device 301 determines that the upward movement of the viewpoint 318 exceeds the movement threshold relative to the force of gravity (e.g., because the elevation of the head of the user is angled forward (e.g., parallel to the ground and no longer angled toward the ground)). In some examples, as shown in FIG. 3I, in accordance with the determination that the movement of the viewpoint 318 exceeds the movement threshold relative to the force of gravity, the electronic device 301 transitions from displaying the virtual map user interface 310 in the second visual state to displaying the virtual map user interface 310 in the first visual state.

Accordingly, as described above, while displaying the virtual map user interface 310, the electronic device 301 selectively transitions between displaying the virtual map user interface 310 in the first visual state and displaying the virtual map user interface in the second visual state based on changes in the viewpoint 318 (e.g., movement, rotation, and/or translation of the viewpoint 318 caused by movement of the user (e.g., tilting of the user's head and/or change in location of the user within the physical environment)). As showcased by way of example in the description above, the first and second visual states of the virtual map user interface 310 provide varying levels of context (e.g., information) of the physical environment surrounding the user, including businesses, shops, restaurants, etc. that may be of interest to the user (e.g., due to their proximity to the user). Changing the visual state based on changes in the viewpoint 318 provides a hands-free approach to enabling the user to automatically cause display of more or less information pertaining to the user's surrounding environment while the user is moving (e.g., walking), thereby improving user-device interaction, as one benefit. Additionally, automatically transitioning display of the virtual map user interface 310 from the second (e.g., more detailed) visual state to the first visual state in accordance with a determination that the user is walking (irrespective of the direction of the viewpoint 318) reduces potential distraction caused by the details of the virtual map user interface 310, which preserves and improves user awareness and thus user safety within the physical environment, as another benefit.

Attention is now directed to example interactions involving virtual user interfaces associated with a navigation application for navigation to a respective destination in a three-dimensional environment (e.g., an extended reality environment).

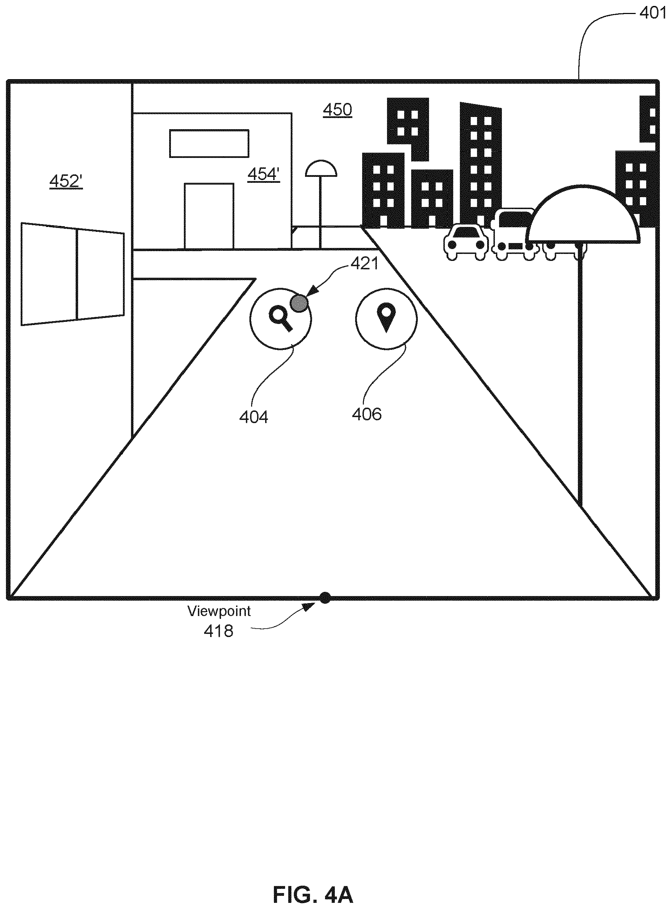

FIGs. 4A-4L illustrate example interactions involving virtual user interfaces in an extended reality environment according to some examples of the disclosure. In some examples, as shown in FIG. 4A, a three-dimensional environment (e.g., an extended reality environment) 450 may be presented using electronic device 401. In some examples, the electronic device 401 optionally corresponds to electronic device 301 discussed above. In some examples, the three-dimensional environment 450 includes captured portions of the physical environment (e.g., the city environment discussed previously above) in which electronic device 401 is located. For example, the three-dimensional environment 450 optionally includes a first building (e.g., a representation of first building 452') and a second building (e.g., a representation of second building 454'), as shown in FIG. 4A. In some examples, the three-dimensional environment 450 optionally corresponds to three-dimensional environment 350 described above. In some examples, the representations of the physical environment can include portions of the physical environment viewed through a transparent or translucent display of electronic device 401.

As similarly discussed above, in some examples, the three-dimensional environment 450 may include one or more user interface objects that are associated with a navigation application operating on the electronic device 401. For example, as shown in FIG. 4A, the three-dimensional environment 450 at the electronic device 401 may include the first option 404 and the second option 406 (e.g., corresponding to first option 304 and second option 306 in FIG. 3A, respectively). In some examples, as similarly described above, the first option 404 and the second option 406 may be configured to be responsive to gaze-based interaction (or other types of interactions, as described above). For example, as previously described herein, the first option 404 and/or the second option 406 may be targeted and selected in response to detecting the gaze of the user directed to the first option 404 and/or the second option 406 in the three-dimensional environment 450. In FIG. 4A, the electronic device 401 detects the gaze of the user, represented by gaze point 421, directed to the first option 404 in the three-dimensional environment 450. In some examples, as similarly described above, the electronic device 401 detects the gaze point 421 directed to the first option 404 for a threshold amount of time (e.g., 0.25, 0.5, 1, 1.5, 2, 3, 4, 5, 8, or 10 seconds).

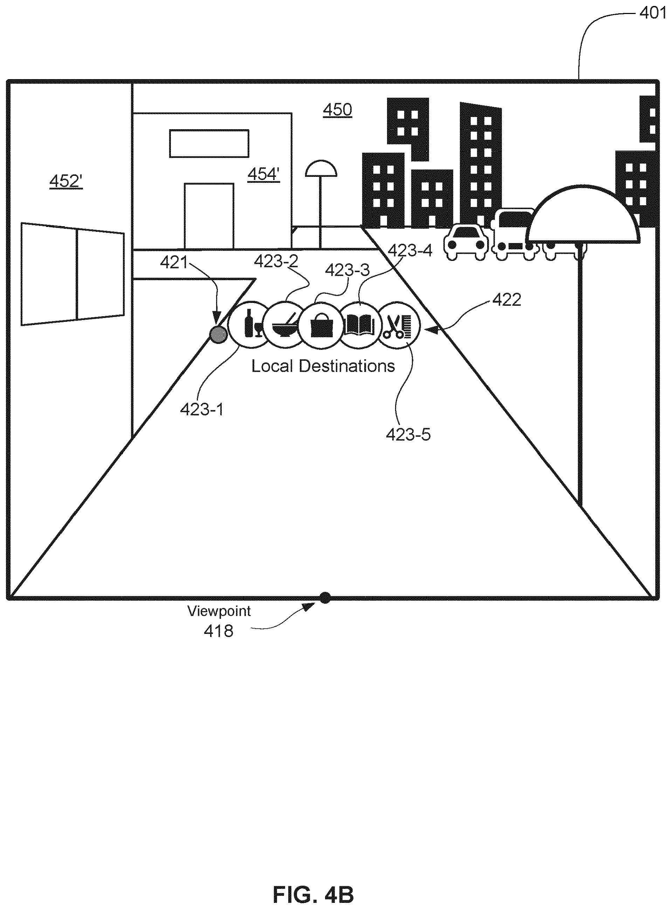

In some examples, as shown in FIG. 4B, in response to detecting the gaze (or other input) directed to the first option 404 in the three-dimensional environment 450, the electronic device 401 displays a virtual search user interface 422 in the three-dimensional environment 450. For example, as shown in FIG. 4B, the electronic device 401 replaces display of the first option 404 and the second option 406 with the virtual search user interface 422. As described herein, the virtual search user interface 422 enables the user to identify a destination for navigation by perusing through respective types (e.g., categories) of destinations/locations in the physical environment surrounding the user. In some examples, as shown in FIG. 4B, the virtual search user interface 422 comprises a plurality of user interface objects 423 corresponding to a plurality of types (e.g., categories) of locations (e.g., businesses, shops, restaurants, etc.) that are proximate to the user (e.g., within a threshold distance, such as 25, 30, 45, 50, 75, 100, 150, 200, 300, 400, 500, or 750 feet of a current location of the user). For example, as shown in FIG. 4B, the plurality of user interface objects 423 includes a first user interface object 423-1 corresponding to a first location type (e.g., bars/breweries), a second user interface object 423-2 corresponding to a second location type (e.g., restaurants that serve ramen), a third user interface object 423-3 corresponding to a third location type (e.g., grocery stores), a fourth user interface object 424-4 corresponding to a fourth location type (e.g., book stores/libraries), and/or a fifth user interface object 424-5 corresponding to a fifth location type (e.g., barber shops/hair salons). In some examples, as shown in FIG. 4B, the plurality of user interface objects 423 includes graphical representations (e.g., icons, images, video clips, or other renderings) indicating the location type to which each user interface object corresponds. In some examples, as described in more detail below, the plurality of user interface objects 423 are selectable to display visual indications of locations that of the selected location type.

In some examples, the plurality of user interface objects 423 is scrollable (e.g., horizontally) within the virtual search user interface 422 in the three-dimensional environment 450. In some examples, as similarly discussed herein, the electronic device 401 scrolls the plurality of user interface objects 423 in response to gaze-based inputs. As shown in FIG. 4B, the electronic device 401 detects the gaze of the user directed to a location of the virtual search user interface 422 that is outside of the plurality of user interface objects 423. For example, in FIG. 4B, the electronic device 401 detects the gaze point 421 directed to the left of the first user interface object 423-1, without detecting the gaze point 421 over a portion of any other user interface objects 423 in the virtual search user interface 422 in the three-dimensional environment 450. In some examples, as similarly described above, the electronic device 401 detects the gaze point 421 directed to the left of the first user interface object 423-1 for the threshold amount of time above.

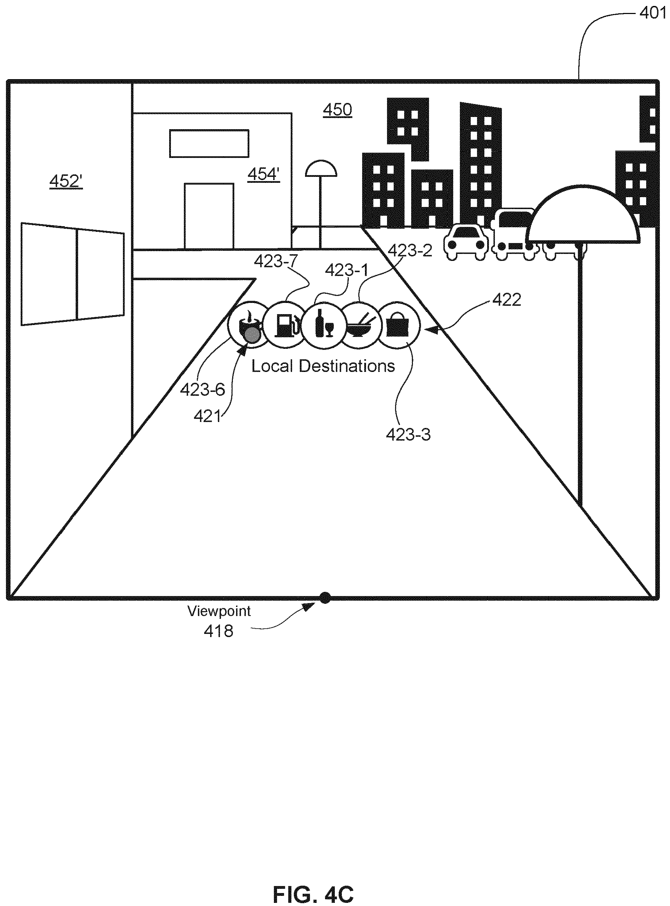

In some examples, as shown in FIG. 4C, in response to detecting the gaze of the user directed outside of the plurality of user interface objects 423, the electronic device 401 scrolls the plurality of user interface objects 423 in the virtual search user interface 422 in the three-dimensional environment 450. For example, as shown in FIG. 4C, the electronic device 401 scrolls the plurality of user interface objects 423 rightward in the virtual search user interface 422. In some examples, scrolling the plurality of user interface objects 423 includes revealing additional user interface objects in the virtual search user interface 422. For example, in the example of FIGs. 4B-4C, five user interface objects 423 are displayed at a time in the virtual search user interface 422, and when the electronic device 401 scrolls through the plurality of user interface objects 423, some user interface objects that were previously displayed (e.g., in FIG. 4B) are no longer displayed and new user interface objects that were not previously displayed are now displayed in the virtual search user interface 422. As shown in FIG. 4C, the plurality of user interface objects 423 optionally includes a sixth user interface object 423-6 corresponding to a sixth location type (e.g., coffee/tea shops) and a seventh user interface object 423-7 corresponding to a seventh location type (e.g., gas stations), along with the first user interface object 423-1, the second user interface object 423-2 and the third user interface object 423-3 discussed previously above.

In FIG. 4C, after scrolling through the plurality of user interface objects 423, the electronic device 401 detects the gaze of the user directed to the sixth user interface object 423-6 in the virtual search user interface. In some examples, as similarly described above, the electronic device 401 detects the gaze point 421 directed to the sixth user interface object 423-6 for the threshold amount of time above. It should be understood that, in some examples, additional or alternative inputs are provided for interacting with the plurality of user interface objects 423 of the virtual search user interface 422 discussed above. For example, the electronic device 401 scrolls through the plurality of user interface objects 423 in response to detecting one or more hand gestures (e.g., a pinch gesture performed by the hand of the user, followed by movement of the hand in space). As another example, the electronic device 401 selects a user interface object in response to detecting a pinch gesture while the gaze of the user is directed to the user interface object. As yet another example, the electronic device 401 may perform the search (e.g., including scrolling through the plurality of user interface objects 423) in response to detecting one or more voice commands provided by the user, such as a verbal query related to travel to a particular destination (e.g., location or address).

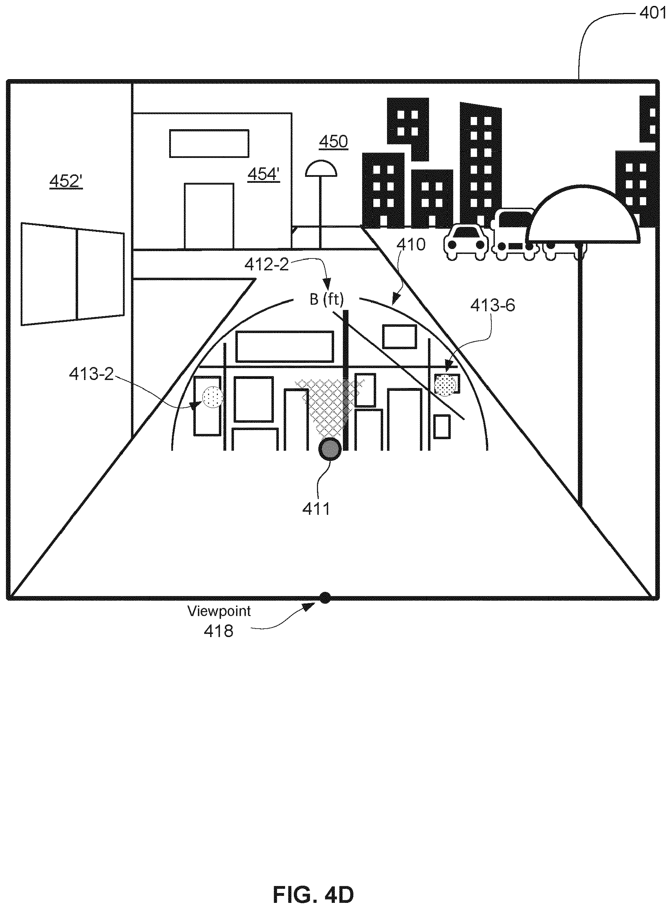

In some examples, as shown in FIG. 4D, in response to detecting the gaze of the user directed to the sixth user interface object 423-6 in the virtual search user interface 422, the electronic device 401 displays virtual map user interface 410 in the three-dimensional environment 450. For example, as shown in FIG. 4D, the electronic device 401 replaces display of the virtual search user interface 422 with the virtual map user interface 410. In some examples, the virtual map user interface 410 has one or more characteristics of the virtual map user interface 310 discussed above. In some examples, as similarly described above with reference to FIGs. 3A-3I, the virtual map user interface 410 includes one or more visual indications 413 corresponding to one or more locations in the physical environment surrounding the user. Particularly, in FIG. 4D, the virtual map user interface 410 includes visual indication 413-2 (e.g., corresponding to visual indication 313-2 discussed above) and visual indication 413-6 (e.g., corresponding to visual indication 313-6 discussed above) which correspond to locations that are of the sixth type of location. For example, as discussed above, the sixth user interface object 423-6 in FIG. 4C may correspond to locations that are coffee/tea shops (the sixth type of location). Because the user selected the sixth user interface object 423-6 in FIG. 4C, the visual indications 413-2 and 413-6 included in the virtual map user interface 410 in FIG. 4D correspond to coffee/tea shops that are proximate to the user (e.g., are within the bound delineated by textual element 412-2 (e.g., the coffee/tea shops are less than the B distance from the current location of the user (represented by visual indication 411)), as similarly discussed above).

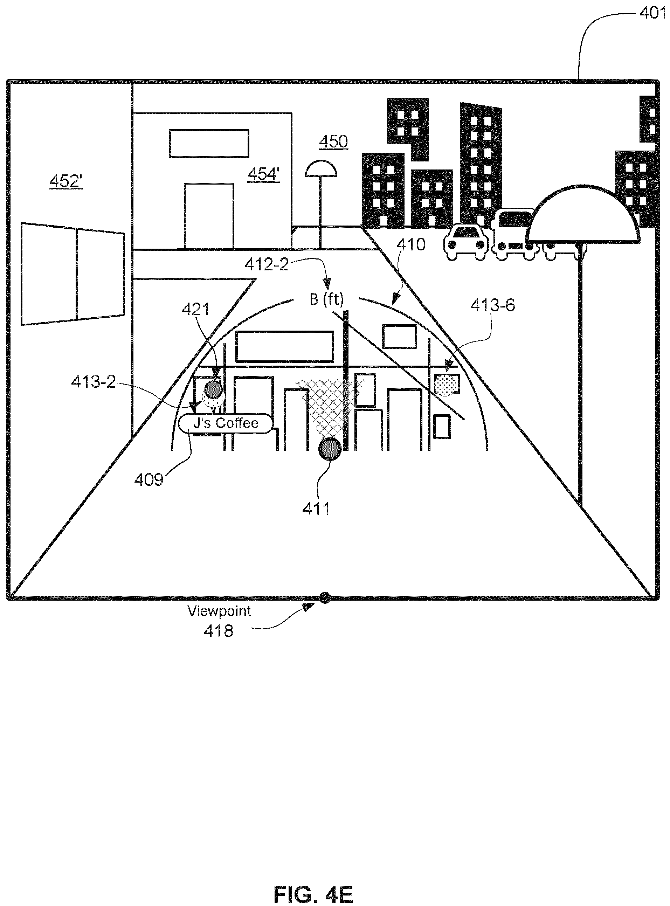

In some examples, as similarly described above, while displaying the virtual map user interface 410 in the three-dimensional environment 450, the visual indications 413 of the virtual map user interface 410 are responsive to the gaze of the user. For example, as shown in FIG. 4E, the electronic device 401 detects the gaze of the user directed to the visual indication 413-2 in the virtual map user interface 410. In some examples, as shown in FIG. 4E, in response to detecting the gaze point 421 directed to the visual indication 413-2, the electronic device 401 displays information 409 corresponding to a particular coffee/tea shop in the virtual map user interface 410. For example, in FIG. 4E, the electronic device 401 displays the information 409 (e.g., as a text label) overlaid on or below the visual indication 413-2. In some examples, as similarly discussed above, the information 409 includes a name or title associated with the particular coffee/tea shop ("J's Coffee"), as shown in FIG. 4E.

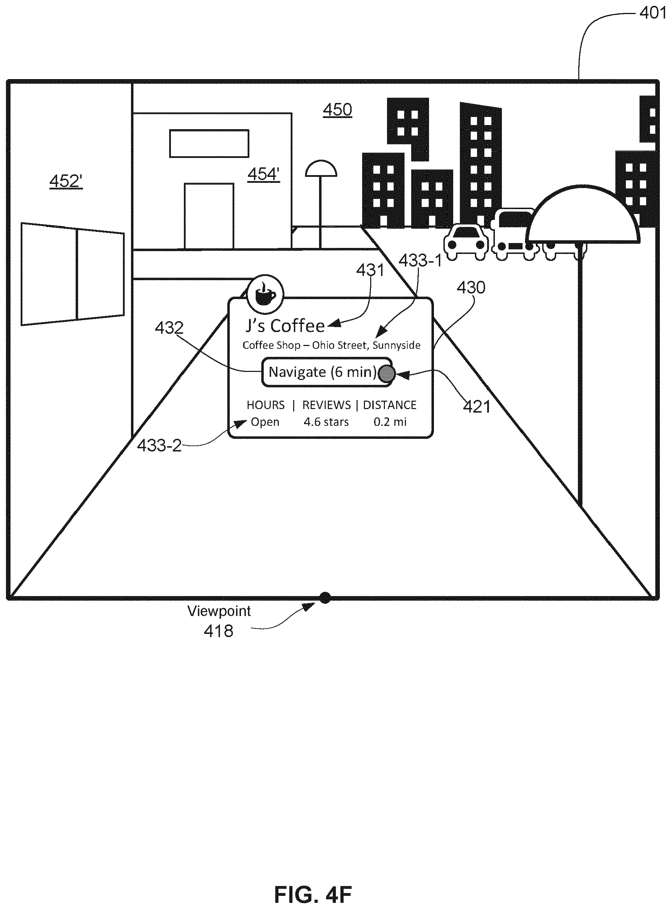

From FIGs. 4E-4F, after the information 409 is displayed in the virtual map user interface 410, the electronic device 401 detects the gaze of the user continue to be directed to the visual indication 413-2. For example, from FIGs. 4E-4F, the electronic device 401 detects the gaze point 421 directed to the visual indication 413-2 for the threshold amount of time above. In some examples, as shown in FIG. 4F, in response to detecting the gaze of the user directed to the visual indication 413-2 for the additional threshold amount of time (or other selection input), the electronic device 401 displays virtual window 430 that is associated with the location (J's Coffee) corresponding to the visual indication 413-2. For example, as shown in FIG. 4F, the electronic device 401 replaces display of the virtual map user interface 410 with the virtual window 430 in the three-dimensional environment 450.

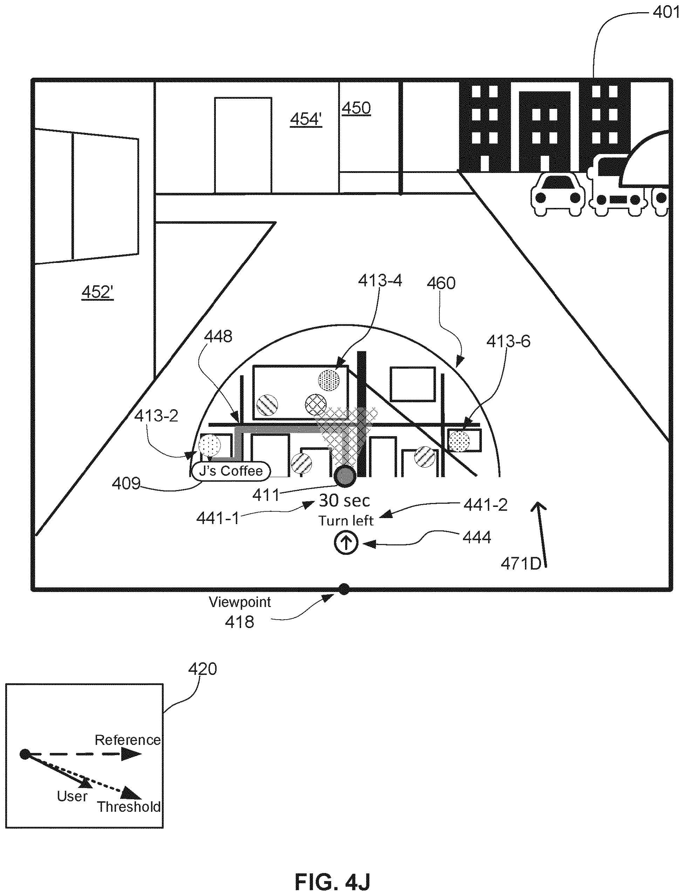

In some examples, as shown in FIG. 4F, the virtual window 430 associated with the location/destination selected by the user includes information for navigating to the location/destination. For example, in FIG. 4F, the virtual window 430 includes information 431 identifying the name of the location ("J's Coffee"), information 433-1 identifying a location type and/or address (e.g., including street name and/or city) associated with the location ("Coffee Shop - Ohio Street, Sunnyside"), and/or information 433-2 identifying hours of operation ("Open"), user reviews for the location ("4.6 stars") and distance to the location from the user's current location ("0.2 mi"). Additionally, as shown in FIG. 4F, the virtual window 430 optionally includes a navigation option 432 that comprises an estimated travel time ("6 min") for navigating to the location (e.g., in the example of FIG. 4F, J's Coffee is a six-minute walk from the user's current location). It should be understood that the information illustrated in FIG. 4F and described above is exemplary and that, in some examples, additional, alternative, and/or less information is provided in the virtual window 430 for aiding the user's decision to navigate to the location.

In FIG. 4F, while the virtual window 430 is displayed in the three-dimensional environment 450, the electronic device 401 detects an input corresponding to a request to navigate the location (J's Coffee). For example, as shown in FIG. 4F, the electronic device 401 detects the gaze of the user directed to the navigate option 432 of the virtual window 430. In some examples, the electronic device 401 detects the gaze point 421 directed to the navigate option 432 for the threshold amount of time discussed previously above.

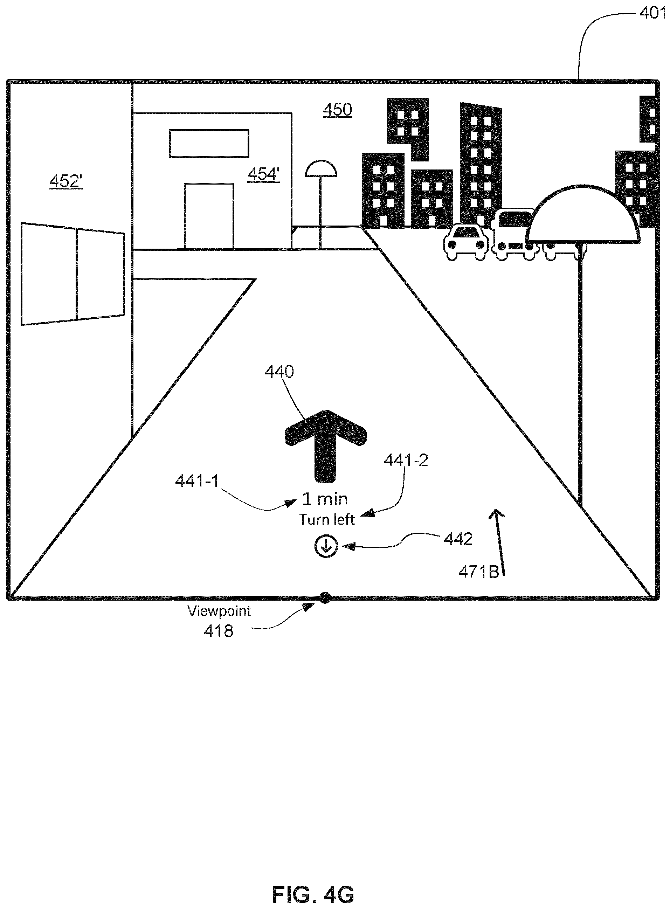

In some examples, as shown in FIG. 4G, in response to detecting the gaze directed to the navigate option 432 (or other selection input), the electronic device 401 initiates navigation to the destination (J's Coffee). For example, as shown in FIG. 4G, initiating navigation to the destination includes displaying one or more virtual objects in the three-dimensional environment 450 for navigating to the destination. In some examples, the one or more virtual objects for navigating to the destination include a dynamic directional element 440 (e.g., an arrow-shaped element), one or more navigation elements 441, and selectable option 442. In some examples, the dynamic directional element 440 is configured to visually guide a direction of travel of the user (e.g., by pointing in the direction of travel) for reaching the destination in the three-dimensional environment 450. In some examples, the one or more navigation elements 441 provide step-by-step directions for navigating to the destination via timing element 441-1 and step element 441-2. For example, in FIG. 4G, the one or more navigation elements 441 visually indicate (e.g., textually) that, after navigation to the destination (J's Coffee) has been initiated, a first step for travelling (e.g., walking) to the destination includes turning left in approximately one minute (e.g., calculated based on a distance between the user's current location and the location at which the user is to turn left and a speed of travel of the user). In some examples, as described in more detail below, the selectable option 442 is selectable to display an expanded view of the one or more virtual objects for navigating to the destination. In some examples, the one or more virtual objects are displayed in a head locked orientation in the three-dimensional environment 450.

In FIG. 4G, after the navigation is initiated, the electronic device 401 detects movement, including translation, of viewpoint 418 of the user in the three-dimensional environment 450. For example, as shown in FIG. 4G, the electronic device 401 detects translation forward in the three-dimensional environment 450, as represented by arrow 471B. In some examples, the translation of the viewpoint 418 corresponds to movement of the user within the physical environment that is visible in the three-dimensional environment 450. For example, in FIG. 4G, the user walks forward in the physical environment (which optionally causes the display generation component of the electronic device 401 to shift forward in the physical environment).

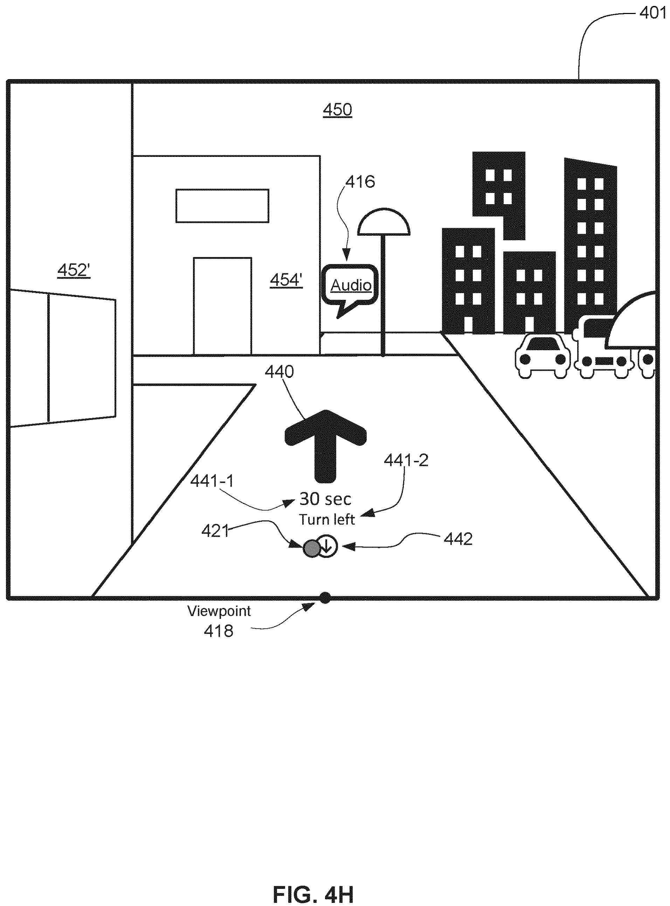

In some examples, as shown in FIG. 4H, in response to detecting the translation of the viewpoint 418, the electronic device 401 updates presentation of the three-dimensional environment 450 in accordance with the translation of the viewpoint 418. For example, as shown in FIG. 4H, because the viewpoint 418 is translated forward in the three-dimensional environment 450, the representation of the first building 452' and the representation of the second building 454' are shifted forward (toward the viewpoint 418) and optionally appear to be larger in the field of view of the user (e.g., because the first building and the second building are located closer to the user in the physical environment after the user began walking in FIG. 4H).

Additionally, in some examples, as shown in FIG. 4H, the electronic device 401 updates display of the one or more virtual objects 440 and 441 for navigating to the destination (J's Coffee) based on the translation of the viewpoint 418. For example, as shown in FIG. 4H, because the user has walked forward in the physical environment (which causes the viewpoint 418 to be translated as discussed above), the distance between the user's current location in the physical environment and the location at which the user is to turn left in the physical environment decreases, which thus decreases the time until the user is to turn left in the physical environment (e.g., down to "30 sec"), as indicated by the timing element 441-1. In some examples, while the user is traveling to the destination, the electronic device 401 outputs audio associated with navigating to the destination. For example, the electronic device 401 outputs audio that includes verbal instructions for walking to J's Coffee (e.g., in addition to the visual cues provided by the one or more virtual objects 440 and 441), such as audio including the words "in 30 seconds, turn left". In some examples, the audio is output as spatial audio in the three-dimensional environment 450. For example, as illustrated by audio bubble 416, the audio output by the electronic device 401 audibly appears to be originating from the location at which the user is to turn left in the physical environment that is visible in the three-dimensional environment 450.

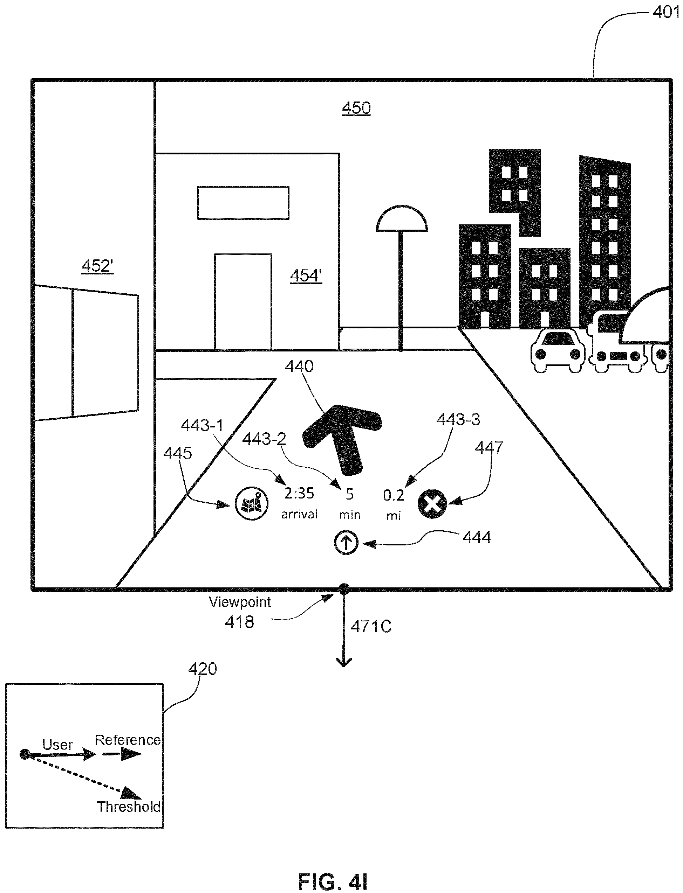

In FIG. 4H, while navigating to the destination, the electronic device 401 detects the gaze of the user (or other selection input) directed to the selectable option 442 discussed above. For example, as similarly described above, while the user is walking in the physical environment and while the one or more virtual objects 440 and 441 are displayed, the electronic device 401 detects the gaze point 421 directed to the selectable option 442 for the threshold amount of time discussed above. In some examples, as shown in FIG. 4I, in response to detecting the gaze of the user directed to the selectable option 442, the electronic device 401 displays an expanded view of the one or more virtual objects in the three-dimensional environment 450. In some examples, as discussed below, displaying the expanded view of the one or more virtual objects includes displaying additional objects/options in the three-dimensional environment 450.

In some examples, as shown in FIG. 4I, the electronic device 401 concurrently displays the dynamic directional element 440, a plurality of route elements 443, map option 445, exit option 447, and selectable option 444. In some examples, the plurality of route elements 443 replace the one or more navigation elements 441 of FIG. 4H in the three-dimensional environment 450. In some examples, the plurality of route elements 443 includes a first route element 443-1 that indicates an estimated time of arrival at the destination ("2:35"), a second route element 443-2 that indicates an estimated time remaining until reaching the destination ("5 min"), and a third route element 443-3 that indicates an estimated distance between the user's current location and the destination ("0.2 mi"). In some examples, as similarly described above with reference to the navigation elements 441-1 and 441-2, the plurality of route elements 443 is configured to be updated during the navigation to the destination. For example, the estimated time indicated by the second route element 443-2 and/or the estimated distance indicated by the third route element 443-3 are configured to be updated as the user walks toward (and gets closer to) the destination in the physical environment.

Additionally, in some examples, the map option 445 is selectable to display a map navigation user interface (e.g., described in more detail below) that visually provides an overview of the route of travel from the user's current location to the destination. In some examples, the exit option 447 is selectable to cease navigation to the destination. For example, in response to detecting selection (e.g., based on gaze of the user) of the exit option 447, the electronic device 401 ceases display of the virtual objects (e.g., 440, 443, 445, 447, and/or 444) in the three-dimensional environment 450 and redisplays the virtual window 430 shown previously in FIG. 4F. In some examples, the selectable option 444 is selectable to redisplay the one or more virtual objects 440 and 441 illustrated previously in FIGs. 4G-4H in the three-dimensional environment 450.

In some examples, as similarly described previously above with reference to FIGs. 3A-3I, while navigating to the destination, the display of the virtual objects for navigating to the destination (e.g., the expanded view in FIG. 4I and/or the unexpanded view in FIGs. 4G-4H) in the three-dimensional environment 450 may be transitioned to a map view in response to detecting movement of the viewpoint 418 of the user. Particularly, in some examples, the electronic device 401 transitions between displaying the one or more virtual objects, such as the dynamic directional element 440 and the one or more navigation elements 441 or the plurality of route elements 443, and a map navigation user interface in the three-dimensional environment 450 in response to detecting movement of the viewpoint 418 of the user beyond a threshold movement (e.g., an angular threshold, as previously discussed above), as represented by "Threshold" arrow in legend 420, relative to a reference ray, as represented by "Reference" arrow in the legend 420 and described previously above, in the pitch direction. In some examples, if the movement of the viewpoint 418 does not exceed the threshold movement, the electronic device 401 maintains display of the one or more virtual objects for navigating to the destination in their current form (e.g., expanded or unexpanded view) in the three-dimensional environment 450.

In FIG. 4I, the electronic device 401 optionally detects (e.g., radial) movement of the viewpoint 418 of the user while the one or more virtual objects for navigating to the destination (J's Coffee) are displayed in the expanded view in the three-dimensional environment 450. For example, as shown in FIG. 4A, the electronic device 401 detects movement of the viewpoint 418 downward (e.g., clockwise) in the pitch direction relative to the three-dimensional environment 450, as represented by arrow 471C. In some examples, as similarly discussed above, the movement of the viewpoint 418 of the user corresponds to movement of the electronic device 401 (e.g., including the display generation component of the electronic device 401) downward in the pitch direction in the physical environment surrounding the electronic device 401. In some examples, the movement of the electronic device 401 is caused by downward tilt of the electronic device 401 in the pitch direction by the user wearing the electronic device 401 (e.g., on the head of the user, as similarly discussed above).

In some examples, in response to detecting the movement of the viewpoint 418 of the user downward in the pitch direction, as shown in FIG. 4J, the electronic device 401 updates presentation of the three-dimensional environment 450 based on the movement of the viewpoint 418. For example, as shown in FIG. 4J, the view of the three-dimensional environment 450 is shifted upward, including the representation of the first building 452' and the representation of the second building 454'. Additionally, as shown in FIG. 4J, the view of the ground (e.g., including the sidewalk on which the user is positioned), road, and street lamps of the physical environment surrounding the electronic device 401 are optionally shifted upward in the field of view of the user of the electronic device 401 relative to the new viewpoint 418.

In some examples, as mentioned above, in response to detecting the movement of the viewpoint 418 of the user, in accordance with a determination that the movement of the viewpoint 418 exceeds the threshold movement, the electronic device 401 transitions from displaying the one or more virtual objects for navigating to the destination (J's Coffee) to displaying a map navigation user interface in the three-dimensional environment 450. In some examples, as shown in FIG. 4J, in response to detecting the movement of the viewpoint 418 downward in the pitch direction, the electronic device 401 determines that the movement of the viewpoint 418 exceeds the threshold movement (e.g., the angular threshold illustrated in the legend 420). For example, as illustrated by "User" arrow in the legend 420, the viewpoint 418 of the user is directed beyond the Threshold ray after the movement of the viewpoint 418. In some examples, in accordance with the determination that the movement of the viewpoint 418 exceeds the threshold movement, the electronic device 401 transitions to displaying map navigation user interface 460 in the three-dimensional environment 450. For example, as shown in FIG. 4J, the electronic device 401 replaces display of the one or more virtual objects for navigating to the destination with the map navigation user interface 460 that visually provides an overview of the route of travel from the user's current location to the destination, as discussed in more detail below. In some examples, the map navigation user interface 460 has one or more characteristics of the virtual map user interface 410/310 described above. In some examples, the map navigation user interface 460 is displayed in a head locked orientation in the three-dimensional environment 450.

In some examples, as shown in FIG. 4J, the map navigation user interface 460 includes a plurality of visual indications 413 corresponding to a plurality of locations that are proximate to the user, including a visual indication 413-2 of the destination to which the user is currently navigating. As shown in FIG. 4J, the visual indication 413-2 is displayed with information 409 that indicates a name or title associated with the destination ("J's Coffee"), as similarly described above. Additionally, as shown in FIG. 4J, in some examples, the map navigation user interface 460 includes a representation 448 of the route of travel from the user's current location to the destination. In some examples, the representation 448 of the route of travel provides a visual overview of the route of travel with respect to representations of (e.g., man-made and natural) geographical features (e.g., corresponding to representations 314/315 described previously herein) that are included in the map navigation user interface 460. For example, in FIG. 4J, the representation 448 highlights/emphasizes the sidewalks and/or streets by which the user will travel to reach the destination (represented by the visual indication 413-2) from the user's current location (represented by visual indication 411).

In some examples, as similarly described herein with reference to the virtual map user interface 310/410 above, the portion of the physical environment surrounding the user that is represented in the map navigation user interface 460 is determined based on the destination (J's Coffee) to which the user is traveling. For example, as shown in FIG. 4J, the visual indication 413-2 corresponding to the destination is located at a boundary or edge of the map navigation user interface 460, and the plurality of visual indications 413, such as the visual indications 413-4 and 413-6, are included in the map navigation user interface 460 because a distance between the current location of the user (represented by the visual indication 411) and each of the locations represented by the plurality of visual indications 413, such as the visual indications 413-3 and 413-6, is less than or equal to the distance between the current location of the user and the destination (represented by the visual indication 413-2).

Additionally, in some examples, as shown in FIG. 4J, the map navigation user interface 460 is concurrently displayed with the one or more navigation elements 441 discussed above in the three-dimensional environment 450. As shown in FIG. 4J, the timing element 441-1 and the step element 441-2 provide visual directions for navigating to the destination (e.g., that the user is to turn left in approximately 30 seconds), while the map navigation user interface 460 provides visual context of the user's surroundings (e.g., surrounding buildings, roads, sidewalks, locations, etc.) during the navigation. Additionally, as shown in FIG. 4J, the electronic device 401 optionally displays the selectable option 444 in the three-dimensional environment 450. In some examples, the selectable option 444 is selectable to cease display of the map navigation user interface 460 and redisplay the one or more virtual objects for navigating to the destination (shown in FIG. 4I in the expanded view), irrespective of the current direction of the viewpoint 418 (e.g., despite the user is looking toward the ground of the physical environment).

In FIG. 4J, while the map navigation user interface 460 is displayed in the three-dimensional environment 450, the electronic device 401 detects movement, including translation, of the viewpoint 418 of the user. For example, as shown in FIG. 4J, the electronic device 401 is moved forward, as represented by arrow 471D, in the physical environment surrounding the electronic device 401 (e.g., because the user wearing the electronic device 401 moves forward in the physical environment), which causes the display generation component of the electronic device 401 to also move forward in the physical environment. In some examples, the translation of the viewpoint 418 of the user corresponds to the user walking forward along the sidewalk of the physical environment in which the electronic device 401 is located.

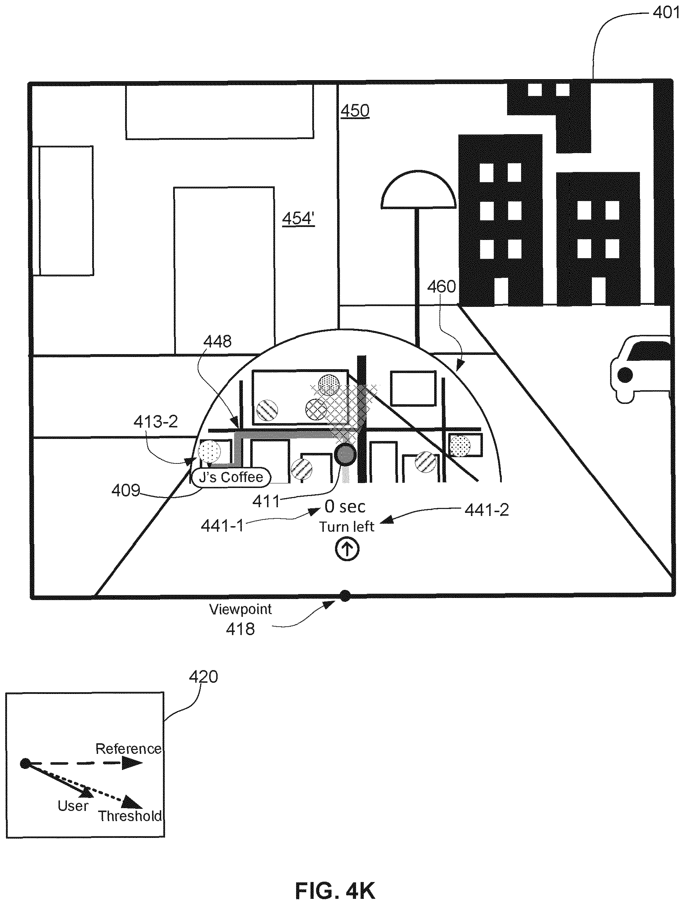

In some examples, as shown in FIG. 4K, in response to detecting the translation of the viewpoint 418 of the user, the electronic device 401 updates presentation of the three-dimensional environment 450. For example, as shown in FIG. 4K, the forward translation of the viewpoint 418 of the user causes the representation of the first building 452' and the representation of the second building 454' to be shifted forward in the view of the three-dimensional environment 450 relative to the new viewpoint 418 of the user, such that the representation of the first building 452' is no longer in the field of view of the user and the representation of the second building 454' occupies a greater portion of the field of view (e.g., because the second building is located closer to the user in the physical environment after the movement of the viewpoint 418).

In some examples, as the viewpoint 418 of the user is translated in the manner described above, the viewpoint 418 of the user remains angled downward toward a portion of the ground of the physical environment that is visible in the field of view of the user, as shown in FIG. 4K. For example, as illustrated in the legend 420 in FIG. 4K, the User ray is directed past the Threshold ray relative to the Reference ray, and thus the movement of the viewpoint 418 of the user in FIG. 4K continues to exceed the threshold movement (e.g., the angular threshold) described above. In some examples, in accordance with a determination that the viewpoint 418 of the user is directed past the threshold angle during the translation of the viewpoint 418, the electronic device 401 maintains display of the map navigation user interface 460 in the three-dimensional environment 450. For example, as shown in FIG. 4K, the electronic device 401 continues displaying the map navigation user interface 460 with the one or more navigation elements 441 in the three-dimensional environment 450 as the user moves (travels toward the destination). In some examples, if, during the translation of the viewpoint 418 in FIG. 4J, the electronic device 401 detects that the viewpoint 418 is directed within the threshold angle from the reference (e.g., if the User ray is directed between the Reference ray and the Threshold ray in the legend 420 in FIG. 4K), the electronic device 401 transitions from displaying the map navigation user interface 460 to displaying the one or more virtual objects for navigating to the destination (e.g., shown previously in FIGs. 4H-4I) in the three-dimensional environment 450.

In some examples, as shown in FIG. 4K, in response to detecting the translation of the viewpoint 418, the electronic device 401 updates display of the map navigation user interface 460 based on the translation of the viewpoint 418. For example, as shown in FIG. 4K, the electronic device 401 moves the visual indication 411 of the current location of the user in the map navigation user interface 460 based on the forward movement of the user in the physical environment. Additionally, in some examples, the electronic device 401 updates display of the representation 448 of the current route of travel from the user's current location to the destination based on the translation of the viewpoint 418. For example, in FIG. 4K, the electronic device 401 updates a visual appearance (e.g., color, shading, pattern, etc.) of the representation 448, such that a portion of the representation 448 that corresponds to a portion of the route that has been traveled (e.g., behind the visual indication 411) is visually different (or, in some examples, is no longer displayed) from a portion of the representation 448 that corresponds to a portion of the route that has not yet been traveled (e.g., ahead of the visual indication 411). In some examples, the electronic device 401 moves the visual indication 411 in the map navigation user interface 460 based on the translation of the viewpoint 418 without changing the visual appearance of the representation 448. Alternatively, in some examples, the electronic device 401 forgoes moving the visual indication 411 in the map navigation user interface 460 and instead updates display of the representations of the geographical features (e.g., 414/415) and the plurality of visual indications (e.g., 413) of the plurality of locations based on the translation of the viewpoint 418 (e.g., as similarly described with reference to FIG. 3G).

Additionally, in some examples, as shown in FIG. 4K, the electronic device 401 updates display of the one or more navigation elements 441 in the three-dimensional environment 450 based on the translation of the viewpoint 418. For example, as shown in FIG. 4K, the information provided by the timing element 441-1 and/or the step element 441-2 changes in accordance with the movement of the user in the physical environment. As shown, because the translation of the viewpoint 418 causes a distance between the current location of the user and the location in the physical environment at which the user is to perform the next step in the navigation (e.g., turning left) to decrease, the electronic device 401 optionally decreases the time (e.g., to 5 seconds) until the user is to perform the next step in the navigation. In some examples, as the user continues traveling toward the destination (e.g., walking to J's Coffee in accordance with the information (e.g., step-by-step instructions) provided by the one or more navigation elements 441), the electronic device 401 updates display of the map navigation user interface 460 and/or the one or more navigation elements 441 in a similar manner as described above.

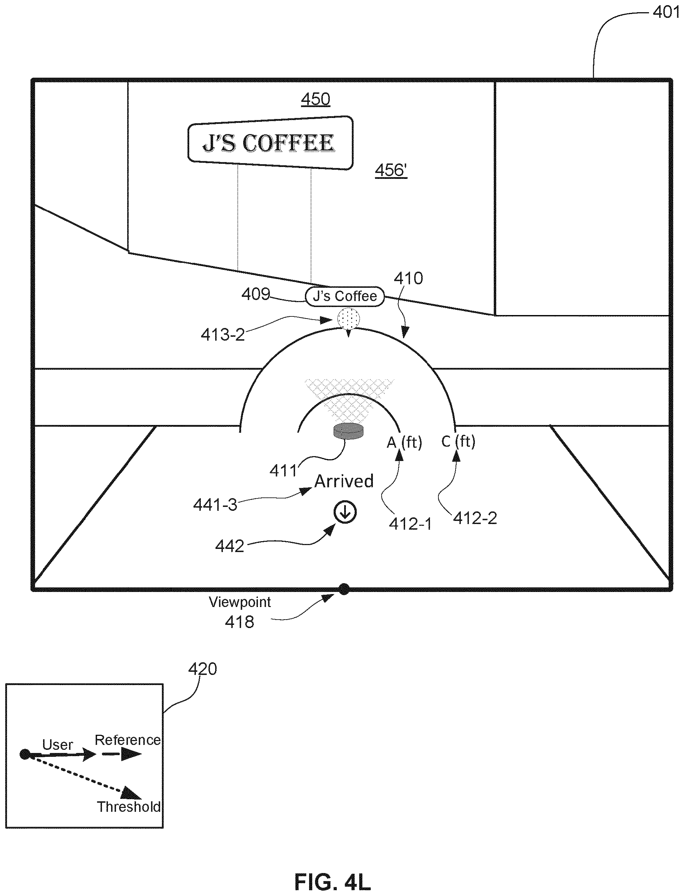

In some examples, while navigating to the destination (e.g., as the viewpoint 418 of the user continues to be translated in the three-dimensional environment 450 caused by movement of the user), in accordance with a determination that the current location of the user is within a predefined distance (e.g., 25, 30, 40, 50, 75, 100, 125, 150, 200, or 300 feet) of the destination in the physical environment, the electronic device 401 displays an arrival user interface in the three-dimensional environment 450. For example, as shown in FIG. 4L, when the current location of the user comes within the predefined distance of the destination (J's Coffee), which is visible in the three-dimensional environment 450 as representation 456', in the physical environment, the electronic device 401 replaces display of the map navigation user interface 460 (or the one or more virtual objects for navigating to the destination, depending on which is displayed when the current location of the user comes within the predefined distance of the destination) with the arrival user interface in the three-dimensional environment 450. In some examples, as shown in FIG. 4L, the arrival user interface includes virtual map user interface 410 (e.g., corresponding to virtual map user interface 310/410 described above), navigation element 441-3, and selectable option 442, as discussed below.

In some examples, as shown in FIG. 4L, the virtual map user interface 410 includes the visual indication 413-2 corresponding to the destination and the information 409 described previously above. Additionally, in FIG. 4L, the virtual map user interface 410 includes one or more textual elements 412, including first textual element 412-1 and second textual element 412-2. As previously discussed above, the first textual element 412-1 and the second textual element 412-2 may delineate proximal and distal bounds, respectively, of the portion of the physical environment that is represented by the virtual map user interface 410. In FIG. 4L, the display of the visual indication 413-2 within the distal bound delineated by the second textual element 412-2 indicates that the current location of the user is within the predefined distance (optionally "C ft") of the destination in the physical environment. As shown in FIG. 4L, in some examples, the navigation element 441-3 indicates that the user has arrived or is about to arrive at the destination ("Arrived") in the physical environment (e.g., indicates that the destination, which is located in the building represented by representation 456' in the three-dimensional environment 450, is in the user's field of view and is less than the predefined distance from the user's current location).

In some examples, when the electronic device 401 determines that the current location of the user is within a second predefined distance (e.g., 1, 2, 3, 5, 10, 15, 20, or 30 feet) from the destination, such as when the visual indication 413-2 is displayed within the proximal bound delineated by the first textual element 412-1 ("A ft"), the electronic device 401 ceases display of the arrival user interface in the three-dimensional environment 450. For example, in FIG. 4L, if the user continues walking toward J's Coffee (associated with the representation 456' in the three-dimensional environment 450) and comes within the second predefined distance of the destination, the electronic device 401 ceases display of the virtual map user interface 410, the navigation element 441-3, and the selectable option 442 in the three-dimensional environment 450. Additionally or alternatively, in some examples, the user may manually close the navigation application (e.g., cease display of the arrival user interface and associated user interface elements). For example, in FIG. 4L, the user may select (e.g., using gaze-based input) the selectable option 442 to initiate a process for closing the navigation application (e.g., causing display of a close option (e.g., similar to 447 in FIG. 4I) that is selectable to cease display of the arrival user interface in the three-dimensional environment 450).

It should be understood that, in some examples, the above description of the destination to which the user of the electronic device 401 navigates additionally or alternatively corresponds to locations of second electronic devices, not solely businesses, shops, restaurants, user addresses (e.g., a home address or work address), etc. For example, the user may utilize the above-described user interfaces of FIGs. 3A-4L to locate and/or navigate to a location of a second electronic device (e.g., a portable consumer device, a cellular device, a laptop computer, an object locator device, etc.) that is associated with the user (e.g., belonging to the user and associated with a same user account of the user of the electronic device 401/301). As another example, the user may utilize the above-described user interfaces to locate and/or navigate to a location of a second electronic device that is associated with a second user that is different from the user of the electronic device 401/301. For example, the location of the second electronic device that is associated with the second user has been shared with the user of the electronic device 401/301 (e.g., the user of the electronic device 401/301 has been granted permission/authorization to view a location of the second user (e.g., via the second electronic device)). In some such examples, the location of the second electronic device may be represented by and locatable via a visual indication (e.g., similar to the visual indications 413/313) that is displayed in one of the above-described user interfaces (e.g., such as the virtual map user interface 410/310). Additionally or alternatively, in some examples, the location of the second electronic device may be locatable via a device locator application (e.g., different from the navigation application discussed above) running on the electronic device 401/301. For example, the device locator application may include a representation of a map of the physical environment surrounding the user (e.g., similar to the virtual map user interface 410/310) and/or a list of known devices, including the second electronic device, that identifies the second electronic device and is interactable with for navigating to the second electronic device (e.g., via the navigation application described above).

Additionally, it is understood that, in some examples, the translation of the viewpoint 418/318 described above may be caused by alternative modes of movement of the user in the physical environment. For example, while the examples provided above primarily discuss the user navigating to the destination by walking within the physical environment, the user may alternatively navigate to the destination by operating or riding in a vehicle (e.g., such as a car, electric scooter, moped, etc.), cycling on a bike, running/jogging, and/or other modes of travel. In some such examples, the electronic device 401 (e.g., while being worn by the user) may present one or more of the user interfaces described above in the three-dimensional environment while the user operates or rides in the vehicle, cycles on the bike, runs/jogs, etc. In some examples, for these alternative modes of travel, the navigation application limits the navigation to the display of the one or more virtual objects (e.g., the directional element 440 and the one or more navigation elements 441) of FIGs. 4G-4H while the user is traveling to a particular destination. For example, the electronic device 401/301 restricts/prevents display of user interfaces that include map views of the physical environment surrounding the user, such as the virtual map user interface 401/301 and/or the map navigation user interface 460. In some examples, such a restriction may be imposed to limit distraction that can be caused by the size, detail, and/or appearance of the map views of the virtual map user interface 401/301 and/or the map navigation user interface 460, thereby improving and/or promoting safety of a user operating a vehicle, bike, etc. In some such examples, the electronic device 401/301 determines the mode of travel of the user during the navigation to the destination based on a speed of motion of the user (e.g., if the electronic device 401/301 detects, via one or more motion sensors, motion of the user above 5 miles per hour, the electronic device 401/301 determines that the user is not walking (and is therefore operating a vehicle, bike, etc.) and therefore restricts the display of navigation user interfaces that include map views). Additionally or alternatively, the electronic device 401/301 optionally determines the mode of travel of the user based on object detection (e.g., using images captured via image sensor(s) 206 in FIG. 2). For example, if the electronic device 401/301 detects, via an image sensor (e.g., a camera), presence of a steering wheel or handle bar in the user's field of view, the electronic device 401/301 determines that the user is not walking and therefore restricts the display of the navigation user interfaces that include map views.

It is understood that the examples shown and described herein are merely exemplary and that additional and/or alternative elements may be provided within the three-dimensional environment for locating and/or navigation to respective locations/destinations in the physical environment surrounding the user. It should be understood that the appearance, shape, form, and size of each of the various user interface elements and objects shown and described herein are exemplary and that alternative appearances, shapes, forms and/or sizes may be provided. For example, the virtual objects representative of application windows (e.g., virtual window 430) and/or the map user interfaces (e.g., virtual map user interface 310/410 and the map navigation user interface 460) may be provided in alternative shapes than those shown, such as a rectangular shape, circular shape, triangular shape, etc. In some examples, the various selectable affordances (e.g., first and second user interface objects 304/404 and 306/406, selectable options 442 and 444, visual indications 313/413, and/or user interface objects 423) described herein may be selected verbally via user verbal commands (e.g., "select option" or "select virtual object" verbal command). Additionally or alternatively, in some examples, the various options, user interface elements, control elements, etc. described herein may be selected and/or manipulated via user input received via one or more input devices in communication with the electronic device(s). For example, selection input may be received via physical input devices, such as a mouse, trackpad, keyboard, etc. in communication with the electronic device(s), or a physical button integrated with the electronic device(s).

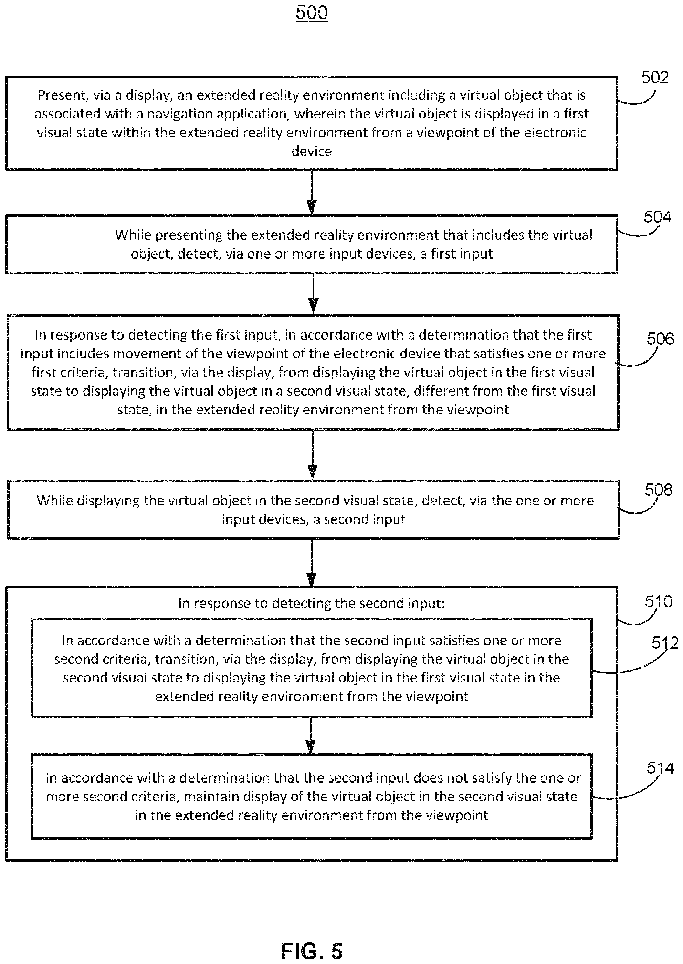

FIG. 5 is a flow diagram illustrating an example process for displaying user interfaces associated with a navigation application based on tilt according to some examples of the disclosure. In some examples, process 500 begins at an electronic device in communication with a display and one or more input devices. In some examples, the electronic device is optionally a head-mounted display similar or corresponding to device 201 of FIG. 2. As shown in FIG. 5, in some examples, at 502, the electronic device presents, via the display, an extended reality environment including a virtual object that is associated with a navigation application, wherein the virtual object is displayed in a first visual state within the extended reality environment from a viewpoint of a user of the electronic device. For example, the electronic device (e.g., electronic device 301 in FIG. 3B) presents a three-dimensional environment, such as three-dimensional environment 350, that includes a virtual object displayed in a first visual state in the three-dimensional environment, such as virtual map user interface 310 in FIG. 3B.

In some examples, at 504, while presenting the extended reality environment that includes the virtual object, the electronic device detects, via the one or more input devices, a first input. For example, the electronic device detects radial movement of the viewpoint of the user upward or downward in the pitch direction relative to the three-dimensional environment, such as the downward movement of the viewpoint 318 represented by arrow 371A in FIG. 3C. In some examples, at 506, in response to detecting the first input, in accordance with a determination that the first input includes movement of a viewpoint of the user of the electronic device that satisfies a criterion (e.g., exceeds a threshold movement, or results in a pose/elevation within a range of poses/elevations), the electronic device transitions, via the display, from displaying the virtual object in the first visual state to displaying the virtual object in a second visual state, different from the first visual state, in the extended reality environment from the viewpoint. For example, as shown in FIG. 3D, if the downward movement of the viewpoint 318 of the user in the pitch direction exceeds an angular threshold relative to a reference (e.g., a ray normal to the force of gravity in the field of view of the user), as illustrated in legend 320 in FIG. 3D, the electronic device transitions from displaying the virtual map user interface 310 in the first visual state to displaying the virtual map user interface 310 in the second visual state (e.g., a more detailed visual state).

In some examples, at 508, while displaying the virtual object in the second visual state, the electronic device detects, via the one or more input devices, a second input. For example, the electronic device detects movement of the viewpoint of the user relative to the three-dimensional environment. In some examples, at 510, in response to detecting the second input, at 512, in accordance with a determination that the second input satisfies one or more first criteria, the electronic device transitions, via the display, from displaying the virtual object in the second visual state to displaying the virtual object in the first visual state in the extended reality environment from the viewpoint. For example, the one or more first criteria are satisfied if, while the virtual object is displayed in the first visual state, the electronic device detects translation of the viewpoint of the user (e.g., caused by movement (walking) of the user), as represented by arrow 371C in FIG. 3F, or the electronic device detects radial movement of the viewpoint upward in the pitch direction below the angular threshold relative to the reference, as represented by arrow 371D in FIG. 3H. In some examples, if the one or more first criteria are satisfied, such as shown in FIGs. 3G and 3I, the electronic device displays the virtual object (e.g., the virtual map user interface 310) in the first visual state in the extended reality environment.

In some examples, at 514, in accordance with a determination that the second input does not satisfy the one or more first criteria, the electronic device maintains display of the virtual object in the second visual state in the extended reality environment from the viewpoint. For example, as shown in FIG. 3E, while the virtual map user interface 310 is displayed in the second visual state in the three-dimensional environment 350, the electronic device detects radial movement of the viewpoint 318 leftward in the yaw direction that does not fall below the angular threshold relative to the reference discussed above, as illustrated in the legend 420 in FIG. 3E. In some examples, if the one or more first criteria are not satisfied, such as shown in FIG. 3F, the electronic device maintains display of the virtual object (e.g., the virtual map user interface 310) in the second visual state in the extended reality environment.

It is understood that process 500 is an example and that more, fewer, or different operations can be performed in the same or in a different order. Additionally, the operations in process 500 described above are, optionally, implemented by running one or more functional modules in an information processing apparatus such as general-purpose processors (e.g., as described with respect to FIG. 2) or application specific chips, and/or by other components of FIG. 2.

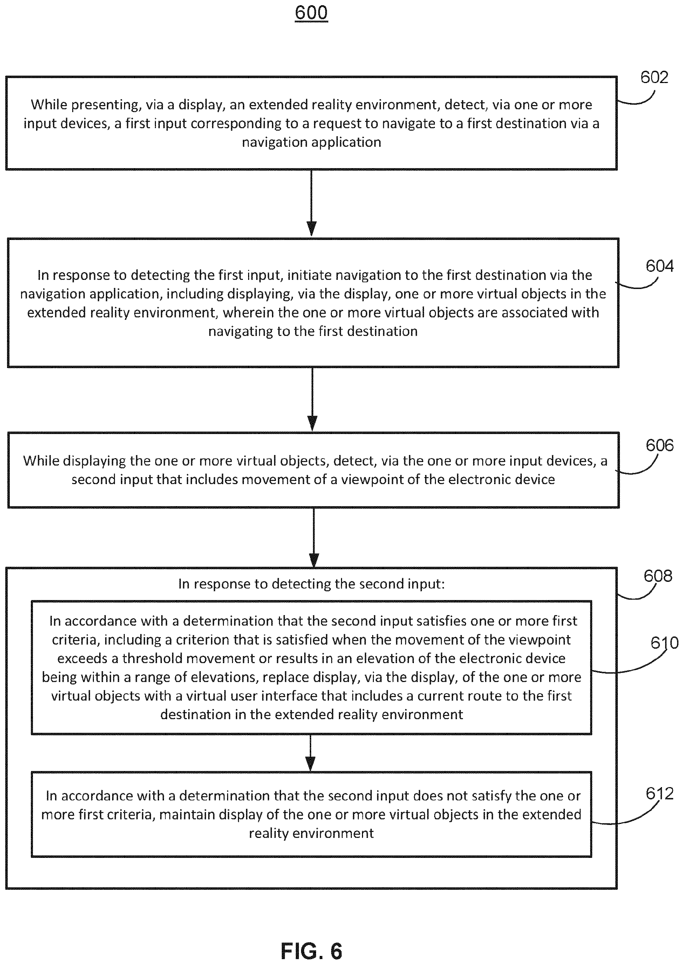

FIG. 6 is a flow diagram illustrating an example process for displaying user interface associated with a navigation application based on tilt according to some examples of the disclosure. In some examples, process 600 begins at an electronic device in communication with a display and one or more input devices. In some examples, the electronic device is optionally a head-mounted display similar or corresponding to device 201 of FIG. 2. As shown in FIG. 6, in some examples, at 602, while presenting, via the display, an extended reality environment, the electronic device detects, via the one or more input devices, a first input corresponding to a request to navigate to a first destination via a navigation application. For example, the electronic device (e.g., electronic device 401 in FIG. 4A) presents a three-dimensional environment, such as three-dimensional environment 450, and detects one or more inputs (e.g., in a virtual search user interface 422), as described with reference to FIGs. 4A-4F, for navigating to a destination (e.g., J's Coffee) in a physical environment that is visible in the three-dimensional environment 450.

In some examples, at 604, in response to detecting the first input, the electronic device initiates navigation to the first destination via the navigation application, including displaying, via the display, one or more virtual objects in the extended reality environment, wherein the one or more virtual objects are associated with navigating to the first destination. For example, as shown in FIG. 4G, the electronic device 401 displays dynamic directional element 440 and one or navigation elements 441-1 and 441-2 that provide visual cues in the three-dimensional environment 450 for guiding the user to the destination. In some examples, at 606, while displaying the one or more virtual objects, the electronic device detects, via the one or more input devices, a second input that includes movement of a viewpoint of the electronic device. For example, the electronic device detects radial movement of the viewpoint of the user upward or downward in the pitch direction relative to the three-dimensional environment, such as the downward movement of the viewpoint 418 represented by arrow 471C in FIG. 4I.

In some examples, at 608, in response to detecting the second input, at 610, in accordance with a determination that the second input satisfies one or more first criteria, including a criterion that is satisfied when the movement of the viewpoint exceeds a threshold movement or results in a pose/elevation within a range of poses/elevations, the electronic device replaces display, via the display, of the one or more virtual objects with a virtual user interface that includes a current route to the first destination in the extended reality environment. For example, the one or more first criteria are satisfied if, while the one or more virtual objects are displayed, the electronic device detects movement of the viewpoint of the user downward in the pitch direction that exceeds an angular threshold relative to a reference (e.g., a ray normal to the force of gravity in the field of view of the user). As shown in FIG. 4J, in accordance with the determination that the second input satisfies the one or more first criteria, the electronic device 401 displays map navigation user interface 460 that includes a representation 448 of the route of travel from a current location of the user to the destination.

In some examples, at 612, in accordance with a determination that the second input does not satisfy the one or more first criteria, including the criterion that is satisfied when the movement of the viewpoint exceeds the threshold movement, the electronic device maintains display of the one or more virtual objects in the extended reality environment. For example, as shown in FIG. 4G, while the one or more virtual objects are displayed in the three-dimensional environment 450, the electronic device detects translation of the viewpoint of the user (e.g., caused by movement (walking) of the user), as represented by arrow 471B, which does not satisfy the one or more first criteria (e.g., because the viewpoint 418 does not exceed the angular threshold relative to the reference discussed above). In some examples, if the one or more first criteria are not satisfied, such as shown in FIG. 4H, the electronic device maintains display of the one or more virtual objects (e.g., the dynamic directional element 440 and the one or more navigation elements 441-1 and 441-2) in the extended reality environment.

It is understood that process 600 is an example and that more, fewer, or different operations can be performed in the same or in a different order. Additionally, the operations in process 600 described above are, optionally, implemented by running one or more functional modules in an information processing apparatus such as general-purpose processors (e.g., as described with respect to FIG. 2) or application specific chips, and/or by other components of FIG. 2.

Therefore, according to the above, some examples of the disclosure are directed to a method at an electronic device in communication with a display and one or more input devices: presenting, via the display, an extended reality environment including a virtual object that is associated with a navigation application, wherein the virtual object is displayed in a first visual state within the extended reality environment from a viewpoint of the electronic device; while presenting the extended reality environment that includes the virtual object, detecting, via the one or more input devices, a first input; in response to detecting the first input, in accordance with a determination that the first input includes movement of the viewpoint of the electronic device that satisfies one or more first criteria, transitioning, via the display, from displaying the virtual object in the first visual state to displaying the virtual object in a second visual state, different from the first visual state, in the extended reality environment from the viewpoint; while displaying the virtual object in the second visual state, detecting, via the one or more input devices, a second input; and in response to detecting the second input, in accordance with a determination that the second input satisfies one or more second criteria, transitioning, via the display, from displaying the virtual object in the second visual state to displaying the virtual object in the first visual state in the extended reality environment from the viewpoint, and in accordance with a determination that the second input does not satisfy the one or more second criteria, maintaining display of the virtual object in the second visual state in the extended reality environment from the viewpoint.

Additionally or alternatively, in some examples, before detecting the first input, the viewpoint of the electronic device is associated with a first elevation relative to a force of gravity, and the one or more second criteria include a criterion that is satisfied when the movement of the viewpoint causes the electronic device to be associated with a second elevation that is within a range of elevations. Additionally or alternatively, in some examples, the electronic device includes a head-mounted display. Additionally or alternatively, in some examples, the determination that the movement of the viewpoint of the user satisfies the one or more first criteria is in accordance with a determination that a vertical component of the movement of the viewpoint of the electronic device exceeds a threshold angle relative to a reference. Additionally or alternatively, in some examples, the reference corresponds to a ray intersecting a horizon of a field of view of the electronic device and normal to a force of gravity. Additionally or alternatively, in some examples, the virtual object is a virtual map user interface that includes a representation of a map of a physical environment surrounding the electronic device, and the virtual map user interface includes a visual indication of a location corresponding to the electronic device in the physical environment overlaid on the representation of the map of the physical environment. Additionally or alternatively, in some examples, the representation of the map of the physical environment surrounding the electronic device is bounded by a predetermined area of the physical environment surrounding the electronic device. Additionally or alternatively, in some examples, the predetermined area of the physical environment surrounding the user is determined based on a predetermined distance from the location corresponding to the electronic device.

Additionally or alternatively, in some examples, the predetermined area of the physical environment surrounding the electronic device is determined based on a mode of travel or a respective travel time at a respective speed from the location corresponding to the electronic device. Additionally or alternatively, in some examples, displaying the virtual object in the first visual state within the extended reality environment includes displaying a first number of user interface objects in the virtual map user interface, wherein the user interface objects correspond to locations in the physical environment surrounding the electronic device. Additionally or alternatively, in some examples, displaying the virtual object in the second visual state in the extended reality environment includes displaying a second number, greater than the first number, of the user interface objects in the virtual map user interface. Additionally or alternatively, in some examples, displaying the virtual object in the first visual state within the extended reality environment includes displaying the representation of the map of the physical environment at a first level of detail in the virtual map user interface. Additionally or alternatively, in some examples, displaying the virtual object in the second visual state in the extended reality environment includes displaying the representation of the map of the physical environment at a second level, greater than the first level, of detail in the virtual map user interface. Additionally or alternatively, in some examples, the representation of the map of the physical environment further includes a plurality of visual indications of a plurality of locations in the physical environment. Additionally or alternatively, in some examples, the method further comprises: while displaying the virtual object in the second visual state, wherein the virtual object includes the plurality of visual indications of the plurality of locations in the physical environment, detecting, via the one or more input devices, a third input that includes gaze directed to a first visual indication of a first location of the plurality of visual indications of the plurality of locations; and in response to detecting the third input, displaying, via the display, a text label with the first visual indication, wherein the text label includes information corresponding to the first location.

Additionally or alternatively, in some examples, in accordance with a determination that the second input satisfies one or more second criteria, transitioning, via the display, from displaying the virtual object in the second visual state to displaying the virtual object in the first visual state in the extended reality environment from the viewpoint includes, in accordance with a determination that the second input causes the location corresponding to the electronic device to change in the physical environment, updating display, via the display, of the visual indication of the location corresponding to the electronic device on the representation of the map of the physical environment based on a change in the location corresponding to the electronic device in the physical environment. Additionally or alternatively, in some examples, the second input includes movement of the viewpoint of the electronic device. Additionally or alternatively, in some examples, the one or more second criteria include a criterion that is satisfied when the movement of the viewpoint includes translation of the viewpoint within the extended reality environment. Additionally or alternatively, in some examples, the translation of the viewpoint within the extended reality environment corresponds to a change in location of the electronic device in a physical environment that is visible in the extended reality environment. Additionally or alternatively, in some examples, the method further comprises: while displaying the virtual object in the first visual state in the extended reality environment from the viewpoint in accordance with the determination that the second input satisfies the one or more second criteria in response to detecting the second input, detecting, via the one or more input devices, an end of the translation of the viewpoint within the extended reality environment; and in response to detecting the end of the translation of the viewpoint, in accordance with a determination that the viewpoint of the user exceeds a threshold angle relative to a reference when the end of the translation of the viewpoint is detected, transitioning, via the display, from displaying the virtual object in the first visual state to displaying the virtual object in the second visual state. Additionally or alternatively, in some examples, before detecting the first input, the viewpoint of the electronic device is associated with a first elevation relative to a force of gravity, and the one or more second criteria include a criterion that is satisfied when the second input includes movement of the viewpoint back to the first elevation.

Some examples of the disclosure are directed to a method comprising, at an electronic device in communication with a display and one or more input devices: while presenting, via the display, an extended reality environment, detecting, via the one or more input devices, a first input corresponding to a request to navigate to a first destination via a navigation application; in response to detecting the first input, initiating navigation to the first destination via the navigation application, including displaying, via the display, one or more virtual objects in the extended reality environment, wherein the one or more virtual objects are associated with navigating to the first destination; while displaying the one or more virtual objects, detecting, via the one or more input devices, a second input that includes movement of a viewpoint the electronic device; and in response to detecting the second input, in accordance with a determination that the second input satisfies one or more first criteria, including a criterion that is satisfied when the movement of the viewpoint exceeds a threshold movement or results in an elevation of the electronic device being within a range of elevations, replacing display, via the display, of the one or more virtual objects with a virtual user interface that includes a current route to the first destination in the extended reality environment, and in accordance with a determination that the second input does not satisfy the one or more first criteria, maintaining display of the one or more virtual objects in the extended reality environment.

Additionally or alternatively, in some examples, the electronic device includes a head-mounted display. Additionally or alternatively, in some examples, the first input includes interaction with a virtual search user interface associated with the navigation application. Additionally or alternatively, in some examples, the interaction with the virtual search user interface is based on a gaze of the user. Additionally or alternatively, in some examples, the interaction is directed to a first user interface object corresponding to the first destination in the virtual search user interface. Additionally or alternatively, in some examples, the interaction directed to the first user interface object corresponds to a selection of the first user interface object, followed by a selection of a navigation option for navigating to the first destination. Additionally or alternatively, in some examples, the one or more virtual objects associated with navigating to the first destination include a first element that is configured to point in a direction of the first destination relative to a current location of the electronic device in the extended reality environment, one or more textual elements that provide visual cues for navigating to the first destination from a location corresponding to the electronic device in the extended reality environment, and a first option. Additionally or alternatively, in some examples, the method further comprises: while navigating to the first destination and while the one or more virtual objects are displayed in the extended reality environment, detecting a third input that includes translation of the viewpoint within the extended reality environment, and in response to detecting the third input, in accordance with a determination that the third input causes the location corresponding to the electronic device to change in the extended reality environment, updating display, via the display, of the one or more virtual objects, including changing the direction in which the first element is pointed in the extended reality environment or updating text in the one or more textual elements to provided updated visual cues for navigating to the first destination based on a change in the location corresponding to the electronic device in the extended reality environment.

Additionally or alternatively, in some examples, the first option is selectable to concurrently display, with the one or more virtual objects, one or more second options in the extended reality environment, and the one or more second options include: a map option that is selectable to display the virtual user interface that includes the current route to the first destination in the extended reality environment; a first respective textual element indicating an estimated time of arrival at the first destination; a second respective textual element indicating a distance between the location corresponding to the user and the first destination; or a second option that is selectable to cease the navigation to the first destination. Additionally or alternatively, in some examples, the one or more virtual objects are displayed at a respective location in the extended reality environment that is based on a predefined portion of the user. Additionally or alternatively, in some examples, the determination that the movement of the viewpoint of the electronic device exceeds the threshold movement is in accordance with a determination that a vertical component of the movement of the viewpoint of the user exceeds a threshold angle relative to a reference. Additionally or alternatively, in some examples, the reference corresponds to a ray intersecting a horizon of a field of view of the electronic device and normal to a force of gravity. Additionally or alternatively, in some examples, the virtual user interface that includes the current route to the first destination in the extended reality environment includes: a representation of a map of a physical environment surrounding the electronic device; and a visual indication of a location corresponding to the electronic device in the physical environment overlaid on the representation of the map of the physical environment; and a representation of the current route that is displayed between the visual indication and a first user interface object corresponding to the first destination and is overlaid on the representation of the map.

Additionally or alternatively, in some examples, the representation of the map of the physical environment surrounding the electronic device is bounded by a predetermined area of the physical environment surrounding the user. Additionally or alternatively, in some examples, the predetermined area of the physical environment surrounding the electronic device is determined based on a distance from the location corresponding to the electronic device to the first destination, and the first user interface object corresponding to the first destination is displayed at an edge of the representation of the map in the virtual user interface. Additionally or alternatively, in some examples, the virtual user interface that includes the current route to the first destination in the extended reality environment further includes a plurality of visual indications of a plurality of locations in the physical environment overlaid on the representation of the map. Additionally or alternatively, in some examples, the method further comprises: while navigating to the first destination and while the one or more virtual objects are displayed in the extended reality environment, detecting a third input that includes translation of the viewpoint in the extended reality environment to within a threshold distance of the first destination; and in response to detecting the third input, replacing display, via the display, of the one or more virtual objects with a first virtual object that is associated with the navigation application, wherein the first virtual object includes a first visual indication corresponding to the first destination and information corresponding to the first destination, and a textual indication that indicates a location corresponding to the electronic device in the extended reality environment is within the threshold distance of the first destination. Additionally or alternatively, in some examples, the first destination corresponds to a physical location in a physical environment surrounding the electronic device. Additionally or alternatively, in some examples, the first destination corresponds to a location of a second electronic device, different from the electronic device, that is associated with a user of the electronic device. Additionally or alternatively, in some examples, the first destination corresponds to a location of a second electronic device, different from the electronic device, that is associated with a second user, different from a user of the electronic device.

Some examples of the disclosure are directed to an electronic device, comprising: one or more processors; memory; and one or more programs stored in the memory and configured to be executed by the one or more processors, the one or more programs including instructions for performing any of the above methods.

Some examples of the disclosure are directed to a non-transitory computer readable storage medium storing one or more programs, the one or more programs comprising instructions, which when executed by one or more processors of an electronic device, cause the electronic device to perform any of the above methods.

Some examples of the disclosure are directed to an electronic device, comprising one or more processors, memory, and means for performing any of the above methods.

Some examples of the disclosure are directed to an information processing apparatus for use in an electronic device, the information processing apparatus comprising means for performing any of the above methods.

The foregoing description, for purpose of explanation, has been described with reference to specific examples. However, the illustrative discussions above are not intended to be exhaustive or to limit the invention to the precise forms disclosed. Many modifications and variations are possible in view of the above teachings. The examples were chosen and described in order to best explain the principles of the invention and its practical applications, to thereby enable others skilled in the art to best use the invention and various described examples with various modifications as are suited to the particular use contemplated.

## Claims

1. A method comprising: at an electronic device in communication with a display and one or more input devices:
while presenting, via the display, an extended reality environment, detecting, via the one or more input devices, a first input corresponding to a request to navigate to a first destination via a navigation application;
in response to detecting the first input, initiating navigation to the first destination via the navigation application, including displaying, via the display, one or more virtual objects in the extended reality environment, wherein the one or more virtual objects are associated with navigating to the first destination;
while displaying the one or more virtual objects, detecting, via the one or more input devices, a second input that includes movement of a viewpoint the electronic device; and
in response to detecting the second input:
in accordance with a determination that the second input satisfies one or more first criteria, including a criterion that is satisfied when the movement of the viewpoint exceeds a threshold movement or results in an elevation of the electronic device being within a range of elevations, replacing display, via the display, of the one or more virtual objects with a virtual user interface that includes a current route to the first destination in the extended reality environment; and
in accordance with a determination that the second input does not satisfy the one or more first criteria, maintaining display of the one or more virtual objects in the extended reality environment.

2. The method of claim 1, wherein the first input includes interaction with a virtual search user interface associated with the navigation application.

3. The method of any one of claims 1-2, wherein the one or more virtual objects associated with navigating to the first destination include:
a first element that is configured to point in a direction of the first destination relative to a current location of the electronic device in the extended reality environment;
one or more textual elements that provide visual cues for navigating to the first destination from a location corresponding to the electronic device in the extended reality environment; and
a first option.

4. The method of claim 3, further comprising:
while navigating to the first destination and while the one or more virtual objects are displayed in the extended reality environment, detecting a third input that includes translation of the viewpoint within the extended reality environment; and
in response to detecting the third input, in accordance with a determination that the third input causes the location corresponding to the electronic device to change in the extended reality environment, updating display, via the display, of the one or more virtual objects, including:
changing the direction in which the first element is pointed in the extended reality environment; or
updating text in the one or more textual elements to provided updated visual cues for navigating to the first destination based on a change in the location corresponding to the electronic device in the extended reality environment.

5. The method of claim 3, wherein:
the first option is selectable to concurrently display, with the one or more virtual objects, one or more second options in the extended reality environment; and
the one or more second options include:
a map option that is selectable to display the virtual user interface that includes the current route to the first destination in the extended reality environment;
a first respective textual element indicating an estimated time of arrival at the first destination;
a second respective textual element indicating a distance between the location corresponding to the user and the first destination; or
a second option that is selectable to cease the navigation to the first destination.

6. The method of any one of claims 1-5, wherein the determination that the movement of the viewpoint of the electronic device exceeds the threshold movement is in accordance with a determination that a vertical component of the movement of the viewpoint of the user exceeds a threshold angle relative to a reference.

7. The method of any one of claims 1-6, wherein the virtual user interface that includes the current route to the first destination in the extended reality environment includes:
a representation of a map of a physical environment surrounding the electronic device;
a visual indication of a location corresponding to the electronic device in the physical environment overlaid on the representation of the map of the physical environment;
a representation of the current route that is displayed between the visual indication and a first user interface object corresponding to the first destination and is overlaid on the representation of the map; and
a plurality of visual indications of a plurality of locations in the physical environment overlaid on the representation of the map.

8. The method of any one of claims 1-7, further comprising:
while navigating to the first destination and while the one or more virtual objects are displayed in the extended reality environment, detecting a third input that includes translation of the viewpoint in the extended reality environment to within a threshold distance of the first destination; and
in response to detecting the third input, replacing display, via the display, of the one or more virtual objects with:
a first virtual object that is associated with the navigation application, wherein the first virtual object includes a first visual indication corresponding to the first destination and information corresponding to the first destination; and
a textual indication that indicates a location corresponding to the electronic device in the extended reality environment is within the threshold distance of the first destination.

9. An electronic device comprising:
one or more processors;
memory; and
one or more programs stored in the memory and configured to be executed by the one or more processors, the one or more programs including instructions for performing any one of the methods of claims 1-8.

10. A non-transitory computer readable storage medium storing one or more programs, the one or more programs comprising instructions, which when executed by one or more processors of an electronic device, cause the electronic device to perform any one of the methods of claims 1-8.
